# EUROPEAN PATENT APPLICATION

(11) **EP 3 496 458 A1**
(43) Date of publication of application: **12.06.2019**
(21) Application number: 16912402.1
(22) Date of filing: 12.08.2016
(51) Int. Cl.: H04W 36/02

(54) **DATA PROCESSING METHOD AND RELEVANT DEVICE**

(71) Applicant: Huawei Technologies Co., Ltd., Longgang District Shenzhen, Guangdong 518129 (CN)
(72) Inventor: YU, Yinghui, Shenzhen Guangdong 518129 (CN); LI, Chenwan, Shenzhen Guangdong 518129 (CN); SHAN, Baokun, Shenzhen Guangdong 518129 (CN); HUANG, Zhenglei, Shenzhen Guangdong 518129 (CN); WANG, Yan, Shenzhen Guangdong 518129 (CN)
(74) Representative: Kreuz, Georg Maria
(86) International application number: PCT/CN2016/094983
(87) International publication number: WO 2018/027947

(57) **Abstract**

Embodiments of this application provide a data processing method and a related device, to effectively ensure that a terminal in the Narrowband Internet of Things can completely receive, after accessing a target base station, downlink data that is not completely received before handover or reselection, in other words, to effectively ensure that the downlink data of the terminal is not lost, thereby ensuring mobility of the terminal in connected mode. Technical solutions provided in the embodiments of this application are as follows: A core network device obtains a first indication message, where the first indication message is used to indicate that a terminal completes a cell change or a cell reselection. The core network device sends downlink data to a target base station, where the target base station is a base station to which the terminal is connected after completing the cell change or the cell reselection.

## Description

### TECHNICAL FIELD

This application relates to the communications field, and in particular, to a data processing method and a related device.

### BACKGROUND

Mobile communication has profoundly changed people's lives, but people never step pursuing mobile communication with higher performance. The 5th Generation (5G) emerges as the times require, to deal with explosive growth of mobile data traffic, massive device connections, various emerging new services and application scenarios in the future. As a composition part of 5G, the Internet of Things has rapidly growing market demand. Currently, 3GPP standards are studying to design new air interfaces based on cellular networks to carry IoT services by fully utilizing characteristics of narrowband technologies. Such type of IoT is referred to as Narrowband Internet of Things (English full name: Narrow Band-Internet of Things, NB-IoT for short). However, due to requirements and characteristics of networks, services, and terminals of the NB-IoT, some new challenges are posed on network architecture design. Currently, the Internet-of- Things implements only a mobility function in idle mode mainly for low-mobility terminals and applications. However, a requirement of the Internet-of- Things with mobility is also an important requirement. Therefore, a problem of mobility in connected mode needs to be resolved.

Currently, to implement mobility of the NB-IoT in connected mode, a handover procedure of Long Term Evolution (English full name: Long Term Evolution, LTE for short) is usually applied to the NB-IoT.

However, because the NB-IoT does not include a Packet Data Convergence Protocol (English full name: Packet Data Convergence Protocol, PDCP for short), the NB-IoT cannot perform data transmission on a control plane. Consequently, after accessing a target base station, a terminal cannot completely receive downlink data that is not completely received before handover.

### SUMMARY

Embodiments of this application provide a data processing method and a related device, to effectively ensure that a terminal can completely receive, after accessing a target base station, downlink data that is not completely received before handover or reselection, in other words, to effectively ensure that the downlink data of the terminal is not lost, thereby ensuring mobility of the terminal in connected mode.

According to a first aspect, an embodiment of this application provides a data processing method, including: A core network device obtains a first indication message that is used to indicate that a terminal completes a cell change or a cell reselection. Then the core network device sends downlink data to a target base station to which the terminal is connected after completing the cell change or the cell reselection.

In the technical solution provided in this embodiment of this application, after acknowledging completion of the cell reselection or completion of the cell change by the terminal, the core network device sends the downlink data to the target base station. This can effectively ensure that the downlink data is not lost after the cell change or the cell reselection, thereby ensuring continuity of the terminal in a mobility state.

In this embodiment of this application, in order not to lose the downlink data, the core network device may perform data processing in the following several manners.

In a possible implementation, the core network device saves the downlink data to be sent to a source base station, and starts a first timer after saving the downlink data. The source base station is a base station to which the terminal is connected before completing the cell change or completing the cell reselection. In this way, the core network device can obtain the first indication message when the first timer does not time out.

In the technical solution provided in this embodiment of this application, the core network device saves the downlink data to be sent to the source base station, and sends the saved downlink data to the target base station after the terminal establishes a connection to the target base station, thereby effectively ensuring that the downlink data is not lost, and further ensuring continuity of the terminal in a mobility state.

Based on the foregoing manner, if the core network device still does not obtain the first indication message after the first timer times out, the core network device deletes the saved downlink data.

In the technical solution provided in this embodiment of this application, the core network device deletes the saved downlink data when the core network device does not obtain the first indication message, so that storage load can be effectively reduced.

Based on the foregoing manner, the core network device receives feedback information that is used to indicate a status of receiving the downlink data by the terminal. If the feedback information indicates that the terminal has completely received the downlink data, the core network device deletes the downlink data. If the feedback information indicates that the terminal does not completely receive the downlink data, the core network device is triggered to send the downlink data to the target base station.

In the technical solution provided in this embodiment of this application, the core network device performs a specific operation based on a specific status of receiving the downlink data by the terminal, thereby helping to reduce storage load and improve working efficiency of the core network device.

Based on the foregoing manner, the first indication message obtained by the core network device may be an initial terminal context message initial UE message, a path switch path switch message, or another message.

In this embodiment of this application, the core network device may obtain the first indication message by using various signaling, so that compatibility and efficiency of the core network device can be effectively improved.

In another possible implementation, before the core network obtains the first indication message, the core network device receives indication signaling that is used to indicate that the terminal is to perform the cell reselection or the cell change. Then the core network device stops sending the downlink data to the source base station, and starts a second timer. The downlink data is downlink data to be sent by the core network device to the source base station. Then the core network device obtains the first indication message when the second timer does not time out.

In the technical solution provided in this embodiment of this application, after receiving the indication signaling that is used to indicate that the terminal is to perform the cell reselection or that the terminal is to perform the cell change, the core network device stops sending the downlink data, and then sends the downlink data to the target base station after the terminal establishes a connection to the target base station, so that it can be effectively ensured that the downlink data is not lost, thereby ensuring continuity of the terminal in a mobility state.

Based on the foregoing manner, if the core network device still does not obtain the first indication message after the second timer times out, in other words, the terminal may fail to be connected to the target base station, the core network device starts to resume sending of the downlink data to the source base station.

In the technical solution provided in this embodiment of this application, the core network device may perform a specific operation based on a specific status, thereby helping to improve working efficiency of the core network device.

Based on the foregoing manner, the first indication message may be an uplink non-access stratum message transport UL NAS transport message or another S1-AP message. This is not specifically limited herein.

In this embodiment of this application, the core network device may obtain the first indication message by using various signaling, so that compatibility and efficiency of the core network device can be effectively improved.

In another possible implementation, before obtaining the first indication message, the core network device receives the indication signaling that is used to indicate that the terminal is to perform the cell reselection or that the terminal is to perform the cell change. Then the core network device starts to send the downlink data to the target base station, keeps sending the downlink data to the source base station, and starts a third timer. The downlink data is downlink data to be sent by the core network device to the source base station. Subsequently, the core network device obtains the first indication message when the third timer does not time out. Finally, if the core network device obtains the first indication message when the third timer does not time out, the core network device sends the downlink data to the target base station and stops sending the downlink data to the source base station.

In the technical solution provided in this embodiment of this application, the core network device may send the downlink data to both the source base station and the target base station, so that it can be effectively ensured that the downlink data is not lost, thereby ensuring continuity of the terminal in a mobility state.

Based on the foregoing manner, if the core network device still does not obtain the first indication message after the third timer times out, in other words, the terminal may fail to be connected to the target base station, the core network device stops sending the downlink data to the target base station.

In the technical solution provided in this embodiment of this application, the core network device may perform a specific operation based on a specific status, thereby helping to improve working efficiency of the core network device.

Based on the foregoing manner, the first indication message is a UL NAS transport message or another S1-AP message.

In this embodiment of this application, the core network device may obtain the first indication message by using various signaling, so that compatibility and efficiency of the core network device can be effectively improved.

In a possible implementation, the core network device may be a mobility management entity (English full name: Mobile Management Entity, MME for short).

In an actual application, alternatively, the core network device may be another entity apparatus. A specific entity apparatus is not limited herein.

According to a second aspect, an embodiment of this application provides a data processing method, including: A source base station corresponding to a source serving cell in which a terminal is located before the terminal completes a cell reselection or completes a cell change obtains a second indication message that is used to indicate that the terminal starts to perform the cell change or that the terminal starts to perform the cell reselection. Then the source base station sends downlink data to a target base station corresponding to the target serving cell after the terminal completes the cell reselection or the cell change, so that the target base station sends the downlink data to the terminal.

In this embodiment of this application, data transmission between the source base station and the target base station can effectively ensure that the downlink data is not lost, thereby ensuring continuity of the terminal in a mobility state.

In a possible design manner, when the second indication message indicates that the terminal completes the cell reselection, the source base station receives a data transmission indication message or a radio link failure indication message sent by the target base station. Then the source base station sends a first request message to the target base station. Finally, the source base station receives a second response message fed back by the target base station as the second indication message. The first request message is a handover request message, and the first response message is a handover acknowledgment message. The first request message and the first response message each may be an X2-AP message. If the first request message is a handover request message, an information element in a handover request is used to indicate whether there is downlink data to be sent to the target base station. If yes, the source base station sends the downlink data to the target base station after receiving the handover request message. The downlink data is data for which the source base station does not receive a receiving acknowledgment, or may be data that is not sent. The first request message is a handover request message, and an information element in the handover request may be used to send the downlink data to the target base station. The downlink data is data for which the source base station does not receive a receiving acknowledgment, or may be data that is not sent.

Certainly, the second request message and the second response message may be another type of message. A specific status is not limited herein.

In a possible design manner, when the second indication message is used to indicate that the terminal starts to perform the cell change, the source base station sends a second request message to the target base station. Finally, the source base station receives a second response message fed back by the target base station as the second indication message. The second request message is a handover request message, and the second response message is a handover acknowledgment message. The second request message is a handover request message, and the second response message is a handover acknowledgment message. The second request message and the second response message each may be an X2-AP message. If the second request message is a handover request message, an information element in a handover request is used to indicate whether there is downlink data to be sent to the target base station. If yes, the source base station sends the downlink data to the target base station after receiving the handover request message. The downlink data is data for which the source base station does not receive a receiving acknowledgment, or may be data that is not sent. The second request message is a handover request message, and an information element in the handover request may be used to send the downlink data to the target base station. The downlink data is data for which the source base station does not receive a receiving acknowledgment, or may be data that is not sent.

Certainly, the second request message and the second response message may be another type of message. A specific status is not limited herein.

In the technical solution provided in this embodiment of this application, the source base station performs a specific operation based on a specific indication message, so that working efficiency of the source base station can be effectively improved.

In a possible design manner, the source base station sends the downlink data to the target base station by using an interconnect interface X2 between base stations.

Certainly, before sending the downlink data to the target base station, the source base station receives the downlink data sent by the core network device. During data transmission, a base station transmits only data and does not forward signaling. Therefore, when sending NAS information to a base station, the core network device needs to indicate, to the source base station, whether data or signaling is sent.

In another possible implementation, the second indication message is an uplink direct transfer message UL information transfer or another Radio Resource Control RRC message. A specific message form is not limited herein.

The foregoing describes only a scenario in which the source base station and the target base station are connected to a same core network device. In an actual application, the source base station and the target base station may be connected to different core network device. The following describes a cross-core network device scenario.

According to a third aspect, an embodiment of this application provides a data processing method, including: A source core network device obtains a third indication message that is used to indicate that a terminal is to change a serving cell or that a target core network device requests to send downlink data. The source core network device is a core network device connected to a source base station to which the terminal establishes a connection before a cell reselection or a cell change. The target core network device is a core network device connected to a target base station to which the terminal establishes a connection after the cell reselection or the cell change. Then the source core network device sends the downlink data to the target core network device, so that the target core network device sends the downlink data to the target base station.

In the technical solution provided in this embodiment of this application, after acknowledging a case in which the terminal is to change the serving cell or the target core network device requests to send the downlink data, the core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

In this embodiment of this application, in order not to lose the downlink data, the core network device may perform data processing in the following several manners.

In a possible implementation, the source core network device saves the downlink data and starts a first timer. The downlink data is downlink data that is sent by the source core network device by using the source base station. If the first timer times out and the source core network device does not obtain the first indication message, the source core network device deletes the downlink data. If the first timer does not time out and the source core network device obtains the first indication message, the source core network device is triggered to send the downlink data to the target core network device.

In the technical solution provided in this embodiment of this application, after acknowledging a case in which the terminal is to change the serving cell or the target core network device requests to send the downlink data, the core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, when the first indication message indicates that the target core network device requests to send the downlink data, the source core network device receives first request information that is sent by the target core network device and that is used to instruct the source core network device to create a data transmission channel. The first request information is sent by the target core network device after receiving first indication information from the target base station connected to the target core network device. The first indication information is used to indicate that the target core network device needs to obtain the downlink data from the source core network device. Then the source core network device sends, to the target core network device, a first response message for setting up a data transmission channel. Finally, the source core network device sends the downlink data to the target core network device.

The first request information may be a create data forwarding tunnel request create data forwarding tunnel request. The first response message may be a create data forwarding tunnel response create data forwarding tunnel response. A specific signaling form is not limited herein.

In the technical solution provided in this embodiment of this application, after acknowledging a case in which the terminal is to change the serving cell or the target core network device requests to send the downlink data, the core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, when the first indication message indicates that the target core network device requests to send the downlink data, the source core network device receives second request information that is sent by the target core network device and that is used to instruct the source core network device to create a data transmission channel. The second request information is sent by the target core network device after receiving the first indication information. Then the source core network device sends, to the target core network device, a second response message for creating a data transmission channel. The second response message carries the downlink data.

The second request information may be a create data forwarding tunnel request create data forwarding tunnel request. The second response message may be a create data forwarding tunnel response create data forwarding tunnel response. A specific signaling form is not limited herein.

In the technical solution provided in this embodiment of this application, after acknowledging a case in which the terminal is to change the serving cell or the target core network device requests to send the downlink data, the core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, when the first indication message indicates that the target core network device requests to send the downlink data, the source core network device receives third request information that is sent by the target core network and that is used to request the downlink data. The third request information is sent by the target core network device after receiving the first indication information. Then the source core network device sends, to the target core network device, a third response message. The third response message carries the downlink data.

The third request information may be a context and data request context and data request. The third response message may be a context and data response context and data response. A specific signaling form is not limited herein.

In the technical solution provided in this embodiment of this application, after acknowledging a case in which the terminal is to change the serving cell or the target core network device requests to send the downlink data, the core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, when the first indication message indicates that the terminal performs the cell change, the source core network device receives a handover request sent by the source base station connected to the source core network device. The handover request includes information about the target core network device. Then the source core network device sends a data allocation request to the target core network device based on the information about the target core network device. Then the source core network device receives a data allocation response fed back by the target core network device as the first indication information. The data allocation response is sent by the target core network device after receiving a handover response fed back by the target base station. Then the source core network device sends, to the target core network device, a fourth request information that is used to instruct the target core network device to create a data transmission channel. Then the source core network device receives a fourth response message that is fed back by the target core network device for creating a data transmission channel. Finally, the source core network device sends the downlink data to the target core network device.

The data allocation request may be a forward relocation request forward relocation request. The data allocation response may be a forward relocation response. The fourth request information may be a create indirect data forwarding tunnel request create indirect data forwarding tunnel request. The fourth response message may be a create indirect data forwarding tunnel response create indirect data forwarding tunnel response. A specific signaling form is not limited herein.

In the technical solution provided in this embodiment of this application, after acknowledging a case in which the terminal is to change the serving cell or the target core network device requests to send the downlink data, the core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, when the first indication message indicates that the terminal performs the cell change, the source core network device receives a handover request sent by the source base station connected to the source core network device. The handover request includes information about the target core network device. Then the source core network device sends a data allocation request to the target core network device based on the information about the target core network device. Then the source core network device receives a data allocation response fed back by the target core network device as the first indication information. The data allocation response is sent by the target core network device after receiving a handover response fed back by the target base station. Then the source core network device receives fifth request information sent by the target core network device. The fifth request information is used to request the downlink data. Finally, the source core network device sends a fifth response message to the target core network device. The fifth response message carries the downlink data.

The data allocation request may be a forward relocation request forward relocation request. The data allocation response may be a forward relocation response. The fifth request information may be a context and data request context and data request. The fifth response message may be a context and data response context and data response. A specific signaling form is not limited herein.

In the technical solution provided in this embodiment of this application, after acknowledging a case in which the terminal is to change the serving cell or the target core network device requests to send the downlink data, the source core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, the source core network device may further receive feedback information that is used to indicate a status of receiving the downlink data by the terminal. If the feedback information indicates that the terminal has completely received the downlink data, the source core network device deletes the downlink data. If the feedback information indicates that the terminal does not completely receive the downlink data, the source core network device is triggered to send the downlink data to the target core network device.

In the technical solution provided in this embodiment of this application, after acknowledging a case in which the terminal is to change the serving cell or the target core network device requests to send the downlink data, the source core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

In another implementation, the source core network device receives indication signaling that is used to indicate that the terminal is to perform the cell reselection or that the terminal is to perform the cell change. Then the source core network device stops sending the downlink data to the source base station, and starts a second timer. Finally, the source core network device obtains the first indication message when the second timer does not time out.

The indication signaling is an uplink non-access stratum transport message UL NAS transport or another uplink message between a base station and a core network. A specific signaling form is not limited herein.

In the technical solution provided in this embodiment of this application, after acknowledging a case in which the terminal is to change the serving cell or the target core network device requests to send the downlink data, the source core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, if the second timer times out and the source core network device does not obtain the first indication message, the source core network device sends the downlink data to the source base station.

Based on the foregoing manner, the source core network device receives sixth request information that is sent by the target core network device and that instructs the source core network device to create a data transmission channel. The sixth request information is sent by the target core network device after receiving second indication information from the target base station. The second indication information is used to indicate that the terminal completes the cell reselection, or that the terminal completes the cell change, and that the target core network device needs to obtain the downlink data from the source core network device. Then the source core network device sends, to the target core network device, a sixth response message for creating a data transmission channel. Finally, the source core network device sends the downlink data to the target core network device.

The sixth request information may be a create indirect data forwarding tunnel request create indirect data forwarding tunnel request. The sixth response message may be a create indirect data forwarding tunnel response create indirect data forwarding tunnel response. A specific signaling form is not limited herein.

In the technical solution provided in this embodiment of this application, after acknowledging a case in which the terminal is to change the serving cell or the target core network device requests to send the downlink data, the source core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

Based on the foregoing manner, the source core network device receives seventh request information that is sent by the target core network device and that is used to request the downlink data from the source core network device. The seventh request information is sent by the target core network device after receiving the second indication information. Then the source core network device sends, to the target core network device, a seventh response message for creating a data transmission channel. The seventh response message carries the downlink data.

The seventh request information may be a context and data request context and data request. The seventh response message may be a context and data response context and data response.

In the technical solution provided in this embodiment of this application, after acknowledging a case in which the terminal is to change the serving cell or the target core network device requests to send the downlink data, the source core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

In another possible implementation, after receiving indication signaling that is used to indicate that the terminal is to perform the cell reselection or that the terminal is to perform the cell change, the source core network device starts to send the downlink data to the terminal by using the target base station, starts to send the downlink data to the terminal by using the source base station, and starts a third timer. If the source core network device obtains the first indication message when the third timer does not time out, the source core network device stops sending the downlink data to the terminal by using the source base station. If the source core network device does not obtain the first indication message after the third timer times out, the source core network device stops sending the downlink data to the terminal by using the target base station.

In the technical solution provided in this embodiment of this application, after acknowledging a case in which the terminal is to change the serving cell or the target core network device requests to send the downlink data, the source core network device sends thee downlink data to the target core network device, and the target core network device then sends the downlink data to the target base station, so that it can be effectively ensured that the downlink data is not lost after the cell change or the cell reselection, thereby ensuring continuity of the terminal in a mobility state.

The source core network device and the target core network device each may be an MME. In an actual application, alternatively, the source core network device and the target core network device may be other entity apparatuses. Specific entity apparatuses are not limited herein.

According to a fourth aspect, an embodiment of this application provides a data processing method, including: A source base station corresponding to a source serving cell in which a terminal is located before a cell reselection or a cell change obtains a second indication message that is used to indicate that the terminal is to perform the cell change or that the terminal completes the cell reselection. The source base station sends downlink data to a target base station corresponding to the target serving cell after the terminal completes the cell reselection or the cell change, so that the target base station sends the downlink data to the terminal.

In this embodiment of this application, data transmission between the source base station and the target base station can effectively ensure that the downlink data is not lost, thereby ensuring continuity of the terminal in a mobility state.

In a possible design manner, when the second indication message indicates that the terminal completes the cell reselection, the source base station receives a cell reselection or cell change indication message or a radio link failure indication message sent by the target base station. Then the source base station sends a first request message to the target base station. Finally, the source base station receives a second response message fed back by the target base station as the second indication message. The first request message is a handover request message, and the first response message is a handover acknowledgment message. The first request message and the first response message each may be an X2-AP message. If the first request message is a handover request message, an information element in a handover request is used to indicate whether there is downlink data to be sent to the target base station. If yes, the source base station sends the downlink data to the target base station after receiving the handover acknowledgment message. The downlink data is data for which the source base station does not receive a receiving acknowledgment, or may be data that is not sent. The first request message is a handover request message, and an information element in the handover request may be used to send the downlink data to the target base station. The downlink data is data for which the source base station does not receive a receiving acknowledgment, or may be data that is not sent.

Certainly, the second request message and the second response message may be another type of message. A specific status is not limited herein.

In a possible design manner, when the second indication message is used to indicate that the terminal starts to perform the cell change, the source base station sends a second request message to the target base station. Finally, the source base station receives a second response message fed back by the target base station as the second indication message. The second request message is a handover request message, and the second response message is a handover acknowledgment message. The second request message is a handover request message, and the second response message is a handover acknowledgment message. The second request message and the second response message each may be an X2-AP message. If the second request message is a handover request message, an information element in a handover request is used to indicate whether there is downlink data to be sent to the target base station. If yes, the source base station sends the downlink data to the target base station after receiving the handover request message. The downlink data is data for which the source base station does not receive a receiving acknowledgment, or may be data that is not sent. The second request message is a handover request message, and an information element in the handover request may be used to send the downlink data to the target base station. The downlink data is data for which the source base station does not receive a receiving acknowledgment, or may be data that is not sent.

Certainly, the second request message and the second response message may be another type of message. A specific status is not limited herein.

In the technical solution provided in this embodiment of this application, the source base station performs a specific operation based on a specific indication message, so that working efficiency of the source base station can be effectively improved.

In a possible design manner, the source base station sends the downlink data to the target base station by using an interconnect interface X2 between base stations.

Certainly, before sending the downlink data to the target base station, the source base station receives the downlink data sent by the core network device. During data transmission, a base station transmits only data and does not forward signaling. Therefore, when sending NAS information to a base station, the core network device needs to indicate, to the source base station, whether data or signaling is sent.

In another possible implementation, the second indication message is an uplink direct transfer message UL information transfer or another Radio Resource Control RRC message. A specific message form is not limited herein.

According to a fifth aspect, an embodiment of this application provides a cell obtaining method, including: When a terminal is connected to a current source serving cell, the terminal obtains a first quality parameter of the current source serving cell. If the first quality parameter is less than a first preset threshold, the terminal obtains a measurement cell set. Then the terminal measures measurement cells in the measurement cell set to obtain a second quality parameter set. Finally, the terminal performs calculation and sorting based on a second preset threshold or a used second quality parameter according to a cell reselection rule, and determines, in the second quality parameter set, a target serving cell corresponding to the second quality parameter.

In the technical solution provided in this embodiment of this application, the terminal determines the target serving cell, thereby reducing measurement energy consumption in connected mode, and reducing power consumption of the terminal.

In a possible implementation, the measurement cell set includes at least one of: a cell with a quality parameter that is obtained through measurement by the terminal in idle mode and that exceeds a preset value, a cell with a quality parameter that is obtained through measurement by the terminal in the idle state and that ranks high, a cell to which the terminal can be connected, a cell in a cell list in a broadcast message received by the terminal, and a cell related to frequency information in the broadcast message received by the terminal.

In the technical solution provided in this embodiment of this application, a cell selection range is centrally measured, thereby reducing a quantity of terminal measurements, and reducing power consumption of the terminal.

In a possible implementation, the terminal reports, by using an uplink direct transfer message, information about the target cell to a source base station corresponding to the current source serving cell. The information about the target cell may include an identifier ID of the target serving cell or an index value of the target serving cell.

In a possible implementation, after the terminal reports, by using the uplink direct transfer message, the target cell to the source base station corresponding to the current source serving cell, the source base station may determine a target base station. Then the source base station sends a handover request message to the target base station. The source base station receives a handover response message fed back by the target base station. The terminal receives the information about the target cell that is sent the source base station by using an RRC connection release message or a downlink direct transfer message. The terminal sends a cell change acknowledgment message to the target base station by using at least one of an RRC connection setup complete message, an RRC reconfiguration complete message, and an uplink direct transfer message.

Based on the foregoing manner, when the terminal sets up a connection to the target base station, the terminal may indicate, to the target base station by using corresponding signaling, a reason for setting up the connection. The reason for the connection may be that the terminal is to perform a cell reselection, or that the terminal is to perform a cell change, or that the terminal is disconnected from a network and needs a reconnection, or the like. A specific reason is not limited herein. Moreover, the terminal may use various types of signaling. This is not limited herein.

Based on the foregoing manner, when the terminal randomly accesses the target base station, the terminal may obtain a configuration of a non-anchor carrier by using specific dedicated signaling or a system broadcast. The dedicated signaling may be a message such as an RRC connection reconfiguration message or an RRC connection release message. The system message may be a system message such as an SIB 1 or an SIB 2. A specific case is not limited herein. A configuration of a random access resource includes information such as duration of the random access resource, a start time of the random access resource, a carrier offset of the random access resource, a subcarrier quantity of the random access resource, a subcarrier start location of a random access resource message 3, a maximum quantity of preamble attempts, a quantity of repetitions of each preamble, a quantity of repetitions of an NPDCCH corresponding to a random access response, a start location of a downlink control channel search space corresponding to the random access response, or an offset of a downlink control channel corresponding to the random access response. The configuration of the non-anchor carrier corresponds to control information of a random access response, and may include information such as a quantity of repetitions of an NPDCCH corresponding to the random access response, a start location of a downlink control channel search space corresponding to the random access response, or an offset of the downlink control channel corresponding to the random access response. A specific case is not limited herein.

According to a sixth aspect, an embodiment of this application provides a core network device. The core network device has a function of implementing the core network device in the foregoing method. The function may be implemented by hardware, or may be implemented by hardware executing corresponding software. The hardware or software includes one or more modules corresponding to the foregoing function.

In a possible implementation, the core network device includes:
a receiving module, configured to obtain a first indication message, where the first indication message is used to indicate that a terminal completes a cell change or a cell reselection; and
a sending module, configured to send downlink data to a target base station, where the target base station is a base station to which the terminal is connected after completing the cell change or the cell reselection.

In another possible implementation, the core network device includes:
a transceiver, a processor, and a bus, wherein
the transceiver and the processor are connected to each other by using the bus; and
the transceiver performs the following steps: obtaining a first indication message, where the first indication message is used to indicate that a terminal completes a cell change or a cell reselection; and sending downlink data to a target base station, where the target base station is a base station to which the terminal is connected after completing the cell change or the cell reselection.

According to a seventh aspect, an embodiment of this application provides a base station. The base station has a function of implementing the base station in the foregoing method. The function may be implemented by hardware, or may be implemented by hardware executing corresponding software. The hardware or software includes one or more modules corresponding to the foregoing function.

In a possible implementation, the base station includes:
a receiving module, configured to obtain a second indication message, where the second indication message is used to indicate that a terminal starts to perform a cell change or that the terminal starts to perform a cell reselection, and the source base station is a base station corresponding to a source serving cell in which the terminal is located before the terminal completes the cell reselection or completes the cell change; and
a sending module, configured to send downlink data to a target base station, so that the target base station sends the downlink data to the terminal, where the target base station is a base station corresponding to the target serving cell after the terminal completes the cell reselection or the cell change.

In another possible implementation, the base station includes:
a transceiver, a processor, and a bus, wherein
the transceiver and the processor are connected to each other by using the bus; and
the transceiver performs the following steps: obtaining a second indication message, where the second indication message is used to indicate that a terminal starts to perform a cell change or that the terminal starts to perform a cell reselection, and the source base station is a base station corresponding to a source serving cell in which the terminal is located before the terminal completes the cell reselection or completes the cell change; and sending downlink data to a target base station, so that the target base station sends the downlink data to the terminal, where the target base station is a base station corresponding to the target serving cell after the terminal completes the cell reselection or the cell change.

According to an eighth aspect, an embodiment of this application provides a computer storage medium. The computer storage medium stores program code. The program code is used to perform the method according to the first aspect.

It can be learned from the foregoing technical solutions that, the embodiments of this application have the following advantages: After acknowledging completion of the cell reselection or completion of the cell change by the terminal, the core network device sends the downlink data to the target base station. This can effectively ensure that the downlink data is not lost after the cell change or the cell reselection, thereby ensuring continuity of the terminal in the mobility state.

### BRIEF DESCRIPTION OF DRAWINGS

FIG. 1 is a schematic framework diagram of a network system according to an embodiment of this application;
FIG. 2 is a schematic diagram of an embodiment of a data processing method according to embodiments of this application;
FIG. 3 is a schematic diagram of another embodiment of a data processing method according to the embodiments of this application;
FIG. 4 is a schematic diagram of another embodiment of a data processing method according to the embodiments of this application;
FIG. 5 is a schematic diagram of another embodiment of a data processing method according to the embodiments of this application;
FIG. 6 is a schematic diagram of another embodiment of a data processing method according to the embodiments of this application;
FIG. 7 is a schematic diagram of another embodiment of a data processing method according to the embodiments of this application;
FIG. 8 is a schematic diagram of another embodiment of a data processing method according to the embodiments of this application;
FIG. 9 is a schematic diagram of another embodiment of a data processing method according to the embodiments of this application;
FIG. 10 is a schematic diagram of another embodiment of a data processing method according to the embodiments of this application;
FIG. 11 is a schematic diagram of another embodiment of a data processing method according to the embodiments of this application;
FIG. 12 is a schematic diagram of another embodiment of a data processing method according to the embodiments of this application;
FIG. 13 is a schematic diagram of another embodiment of a data processing method according to the embodiments of this application;
FIG. 14 is a schematic diagram of another embodiment of a data processing method according to the embodiments of this application;
FIG. 15 is a schematic diagram of another embodiment of a data processing method according to the embodiments of this application;
FIG. 16 is a schematic diagram of another embodiment of a data processing method according to the embodiments of this application;
FIG. 17 is a schematic diagram of another embodiment of a data processing method according to the embodiments of this application;
FIG. 18 is a schematic diagram of another embodiment of a data processing method according to the embodiments of this application;
FIG. 19 is a schematic diagram of another embodiment of a data processing method according to the embodiments of this application;
FIG. 20 is a schematic diagram of another embodiment of a data processing method according to the embodiments of this application;
FIG. 21 is a schematic diagram of another embodiment of a data processing method according to the embodiments of this application;
FIG. 22 is a schematic diagram of another embodiment of a data processing method according to the embodiments of this application;
FIG. 23 is a schematic diagram of an embodiment of a cell obtaining method according to the embodiments of this application;
FIG. 24 is a schematic diagram of an embodiment of a core network device according to the embodiments of this application;
FIG. 25 is a schematic diagram of another embodiment of a core network device according to the embodiments of this application;
FIG. 26 is a schematic diagram of an embodiment of a base station according to the embodiments of this application; and
FIG. 27 is a schematic diagram of another embodiment of a base station according to the embodiments of this application.

### DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by persons skilled in the art based on the embodiments of this application without creative efforts shall fall within the protection scope of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

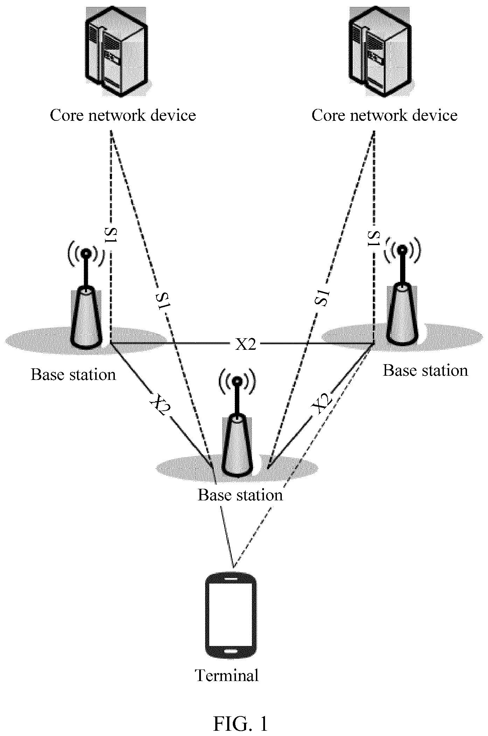

Referring to a network system shown in FIG. 1, the network terminal system includes a base station, a terminal, and a core network device. The network system may include a plurality of base stations, a plurality of core network devices, and a plurality of terminals. The base station and the core network device transmit data to each other by using an S1 interface. The base stations transmit data to each other by using an X2 interface. The terminal and the core network device transmit data to each other by using the base station. The terminal may perform a cell reselection in idle mode, or may perform a cell change in connected mode. In both cases, the terminal needs to exchange data with a core network by using a base station corresponding to a target serving cell instead of exchanging data with the core network by using a base station corresponding to a source serving cell.

Currently, 3GPP standards are studying to design new air interfaces based on cellular networks to carry IoT services by fully utilizing characteristics of narrowband technologies. Such type of IoT is referred to as Narrowband Internet of Things. However, the NB-IoT implements only a mobility function in idle mode mainly for low-mobility terminals and applications. However, a requirement of the Internet-of- Things with mobility is also an important requirement. Therefore, a problem of mobility in connected mode needs to be resolved. Currently, to implement mobility of the NB-IoT in connected mode, a handover procedure of LTE is usually applied to the NB-IoT. However, because the NB-IoT does not include a Packet Data Convergence Protocol (English full name: Packet Data Convergence Protocol, PDCP for short), the NB-IoT cannot perform data transmission on a control plane. Consequently, after accessing a target base station, a terminal cannot completely receive downlink data that is not completely received before handover.

To resolve the problem, the embodiments of this application provide the following technical solution: A core network device obtains a first indication message that is used to indicate that a terminal completes a cell change or a cell reselection. The core network device sends, to the terminal, downlink data to a target base station to which the terminal is connected after completing the cell change or the cell reselection.

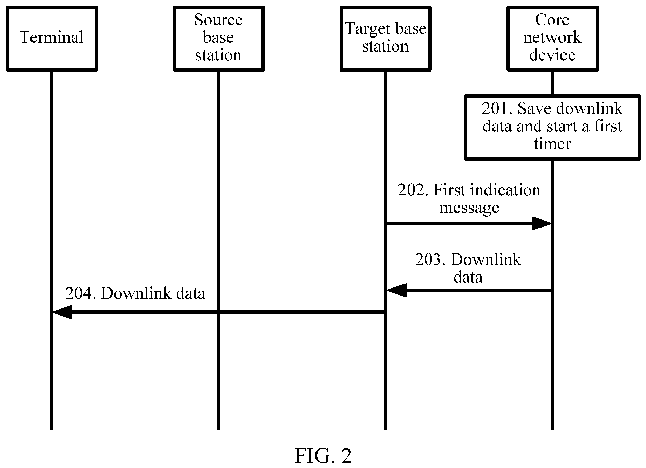

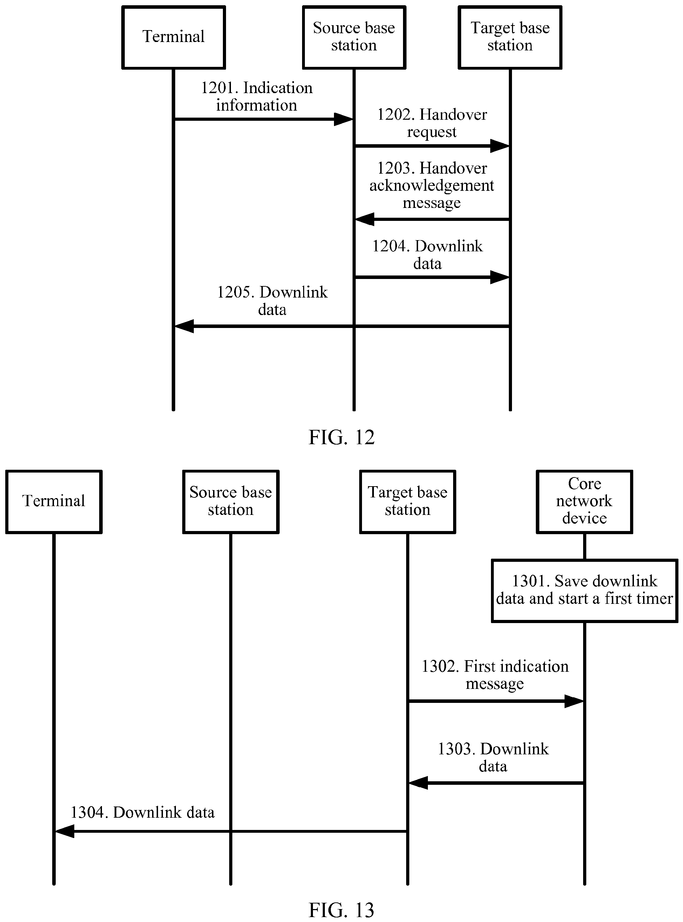

For details, refer to the following several embodiments. FIG. 2 to FIG. 12 each are a data processing method when the terminal performs the cell reselection. FIG. 13 to FIG. 22 each are a data processing method when the terminal performs the cell change.

Specifically, referring to FIG. 2, in this embodiment, the terminal performs the cell reselection, the core network device performs data transmission, and a source base station and a target base station share the core network device.

201. The core network device saves the downlink data and starts a first timer.

When the core network device is to send the downlink data to the source base station, the core network device saves the to-be-sent downlink data, and starts the first timer.

In this embodiment, operation duration of the first timer is preconfigured. Specific duration is not limited herein. The core network device may be an MME or may be another core network device, for example, an SGW. A specific form is not limited herein, provided that it can be effectively ensured that data is not lost. In this embodiment, for example, the core network device is an MME. Duration of the first timer is 10 seconds. The downlink data to be sent by the MME to the source base station is a data packet 1, a data packet 2, a data packet 3, a data packet 4, and a data packet 5. The MME saves the five data packets, and starts the first timer. Certainly, the MME may start a timer 1 after sending the data packet 1, starts a timer 2 after sending the data packet 2, ..., and so on. Values of these timers may be the same or may be different. Alternatively, the MME may start one timer after sending the five packets. A specific used form is not limited.

202. The target base station sends a first indication message to the core network device, where the first indication message is used to indicate that the terminal has completed the cell reselection.

The terminal performs the cell reselection. After the terminal is successfully connected to the target base station, the target base station sends a first indication message to the core network device, to notify the core network device that the terminal has completed the cell reselection.

In this embodiment, if the terminal needs to be connected to the target base station, the terminal may further add a reason for connecting to the target base station by the terminal, to information such as an RRC connection setup request or an RRC connection re-establishment request. For example, it may indicate that the connection is currently performed because of the cell reselection, or it may indicate that the connection is currently performed because reconnection data is required due to a network interruption, or it may indicate that the connection is currently performed because of the cell change. A specific reason is not limited herein. Specifically, in the NB-IoT, there are two data transmission solutions: a solution of transmission based on a control plane, and a solution of transmission based on a user plane. In the solution based on a control plane, when establishing a connection to a target base station, a terminal may initiate an RRC connection setup request, and add a value of a cell reselection or a value of another reason to the RRC connection setup request. A base station sends an RRC connection setup message to the terminal after receiving a connection setup request. The terminal replies to the base station with an RRC connection setup complete message.

In the solution of data transmission by using a user plane, a terminal may send an RRC connection re-establishment request that carries a value of a cell reselection or a value of another reason. After receiving a connection setup request, a base station sends an RRC connection re-establishment message to the terminal. The terminal replies to the base station with an RRC connection re-establishment complete message.

After establishing an RRC connection to the terminal, the base station sends an initial UE message or a path switch message to the core network device. The message also carries a value of a reason for establishing the connection by the terminal. A core network learns of a specific reason for establishing the connection.

Specifically, in the solution of transmission based on a control plane, if a radio link failure occurs, and the terminal still does not receive a downlink acknowledgment message from the core network device, the terminal may send a notification to a NAS layer, and the NAS layer determines to restore the connection. The terminal sends an RRC connection setup request to the target base station, and adds a value of a reason, to indicate that the connection is to be established currently because an acknowledgment message needs to be received from a side of the core network or because of another reason. The target base station may send the message to the core network by using an initial UE message. In this way, the core network learns of the reason for establishing the connection.

Alternatively, in this scenario, the value of the reason that is added by the terminal when sending the RRC connection setup request is MT, an information element is added to a service request message that is sent when the RRC connection setup request is sent, to indicate a reason for the establishment, and then the reason is sent to the core network by using an initial UE message and by using the base station. In this way, the core network learns of the reason for establishing the connection.

Alternatively, in this scenario, the terminal initiates a tracking area update procedure.

In addition, in an actual application, when the terminal randomly accesses the target base station, the terminal may obtain a configuration of a non-anchor carrier by using specific dedicated signaling or a system broadcast. The dedicated signaling may be a message such as an RRC connection reconfiguration message or an RRC connection release message. The system message may be a system message such as an SIB 1 or an SIB 2. A specific case is not limited herein. A configuration of a random access resource includes information such as duration of the random access resource, a start time of the random access resource, a carrier offset of the random access resource, a subcarrier quantity of the random access resource, a subcarrier start location of a random access resource message 3, a maximum quantity of preamble attempts, a quantity of repetitions of each preamble, a quantity of repetitions of an NPDCCH corresponding to a random access response, a start location of a downlink control channel search space corresponding to the random access response, or an offset of a downlink control channel corresponding to the random access response. The configuration of the non-anchor carrier corresponds to control information of a random access response, and may include information such as a quantity of repetitions of an NPDCCH corresponding to the random access response, a start location of a downlink control channel search space corresponding to the random access response, or an offset of the downlink control channel corresponding to the random access response. A specific case is not limited herein.

The first indication message in this embodiment may be a message such as an initial UE message or a path switch message that is sent by the target base station to the core network device. A specific message form is not limited herein.

In this embodiment, if the target base station does not send the first indication message to the core network device after the first timer times out, it indicates that the terminal fails to be connected to the target base station or that the terminal does not perform the cell reselection during operation of the first timer. In this case, the core network device may delete the saved downlink data. For example, if 10 seconds after the MME saves the five data packets, the MME does not receive the message that is sent by the target base station and that indicates that the terminal has completed the cell reselection, the MME delete the five data packets.

203. The core network device sends the downlink data to the target base station.

The core network device sends the saved downlink data to the target base station.

In this embodiment, in the process in which the terminal establishes a connection to the target base station, the terminal may further feed back a status of receiving the downlink data. The terminal may feed back the status of receiving the downlink data in the following manners. For example, if the terminal has not completely received the downlink data, feedback information is sent. If the terminal has completely received the downlink data, feedback information is not sent. Certainly, on the contrary, if the terminal has not completely received the downlink data, feedback information may not be sent. If the terminal has completely received the downlink data, feedback information may be sent. The feedback information may be added to RRC connection setup request signaling or RRC connection setup complete signaling. After receiving the feedback information, the target base station may further add the feedback information to an initial terminal information initial UE message or data path switch path switch to be sent to the core network device, in other words, notify the core network device that the terminal has completely received the downlink data or that the terminal has not completely received the downlink data. If the feedback information indicates that the terminal has completely received the downlink data, the core network device may delete the downlink data. If the feedback information indicates that the terminal has not completely received the downlink data, the core network device then sends the downlink data to the terminal by using the target base station. A specific feedback manner and a feedback information sending manner are not limited herein.

In this embodiment, the terminal may determine whether the terminal has received the five data packets. If the terminal completely receives the five data packets: the data packet 1, the data packet 2, the data packet 3, the data packet 4, and the data packet 5, the terminal may notify, by using the target base station, the core network device that the terminal has completely received the five data packets. In this case, the core network device does not need to send the five pieces of data to the terminal by using the target base station. If the terminal determines that the terminal receives only three data packets: the data packet 1, the data packet 2, and the data packet 3, the terminal may notify, by using the target base station, the core network device that the terminal does not completely receive the five data packets. In this case, the terminal may delete the received data packet 1, data packet 2, and data packet 3, and receive again the five data packets: the data packet 1, the data packet 2, the data packet 3, the data packet 4, and the data packet 5 that are sent by the core network device to the terminal by using the target base station. If the terminal determines that the terminal receives only three data packets: the data packet 1, the data packet 2, and the data packet 3, the terminal may feed back numbers or index values of the received data packets to the core network device. The core network device may delete first three saved packets, and send a fourth packet and a fifth packet by using the target base station. If the core network device sends only one data packet, and the terminal does not completely receive the data packet, the terminal sends feedbacks to a network side, and deletes the NAS packet that is not completely received. The MME sends the NAS packet again by using the target base station. Specifically, UE knows the NAS packet, and may learn of, based on a number of each piece of data, a specific packet that is received. During a feedback, a packet number may be fed back, or a quantity of NAS packets received during a current connection may be fed back. A specific form is not limited.

204. The target base station sends the downlink data to the terminal.

The target base station forwards the downlink data to the terminal.

In an actual application, it may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially received data packets to the core network device. In addition, the terminal may further indicate whether the uplink data is NAS signaling or NAS data when sending the uplink data. In addition, when sending data, the terminal may further send a NAS count of an uplink data packet. If sending a case of a cell reselection, handover, a cell change, or the like, the base station may forward correctly received but out-of-order data packets and numbers to the target base station. The terminal may send, to the target base station, a NAS packet whose receiving is not acknowledged and that corresponds to a NAS count value.

In this embodiment, the core network device saves the downlink data of the terminal, so that after the terminal is handed over from the source base station to the target base station, the core network device sends the saved downlink data to the terminal. This can ensure that no downlink data is lost during reselection, thereby ensuring data continuity.

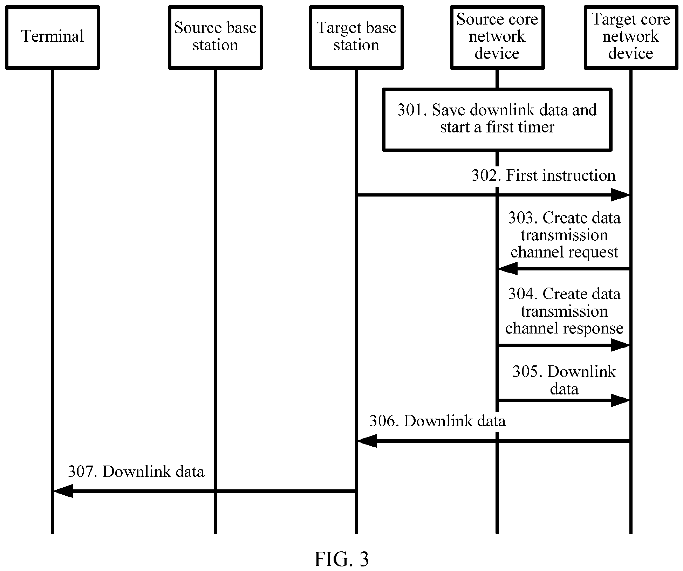

Specifically, referring to FIG. 3, in this embodiment, the terminal performs the cell reselection, the core network device performs data transmission, and a source base station and a target base station are connected to different core network devices.

301. A source core network device saves the downlink data and starts a first timer.

When the source core network device is to send the downlink data to the terminal by using the source base station, the source core network device saves the to-be-sent downlink data, and starts the first timer.

In this embodiment, operation duration of the first timer is preconfigured. Specific duration is not limited herein. The core network device may be an MME or may be another core network device, for example, an SGW. A specific form is not limited herein, provided that it can be effectively ensured that data is not lost. In this embodiment, for example, the core network device is an MME. Duration of the first timer is 10 seconds. Before the cell reselection, the downlink data to be sent by the source MME to the source base station is a data packet 1, a data packet 2, a data packet 3, a data packet 4, and a data packet 5. The MME saves the five data packets, and starts the first timer.

302. The target base station sends a first instruction to a target core network device.

When establishing a connection to the target base station, the terminal adds information about the source base station, and content such as information about the source core network device, for example, a GUTI, to a message for establishing the connection, such as an RRC connection setup request, an RRC connection re-establishment request, an RRC connection setup complete message, or an RRC re-establishment complete message. The target base station forwards content carrying the related information to the target core network device. The message sent by the target base station to the target core network device may be considered as the first instruction. The instruction may instruct a core network whether to obtain data. If data needs to be obtained, the instruction instructs the target core network device to request the downlink data from the source core network device.

In this embodiment, the target base station may send an initial UE massage to the target core network device, and the initial UE massage carries a field or an information element for instructing the target core network device to request the downlink data from the source core network device. The initial UE massage can be used as the first instruction only in this case. For example, in this embodiment, the target base station may send an initial UE massage to the target MME, and adds, to the initial UE massage, a field 1100 for instructing the target MME to request, from the source MME, the five data packets: the data packet 1, the data packet 2, the data packet 3, the data packet 4, and the data packet 5.

303. The target core network device sends a create data transmission channel request to the source core network device.

The target core network device sends the create data transmission channel request to the source core network device.

In this embodiment, the create data transmission channel request may be a create data forwarding tunnel request. Specific signaling is not limited herein.

304. The source core network device sends a create data transmission channel response to the target core network device.

After receiving the create data transmission channel request sent by the target core network device, the source core network device feeds back, to the target core network device, a create data transmission channel response for indicating that the source core network device allows to create the data transmission channel.

In this embodiment, the create data transmission channel response may be a create data forwarding tunnel response. Specific signaling is not limited herein.

305. The source core network device sends the downlink data to the target core network device.

After the data transmission channel is created, the source core network device sends the downlink data to the target core network device. For example, the source MME sends the five data packets: the data packet 1, the data packet 2, the data packet 3, the data packet 4, and the data packet 5 to the target MME.

306. The target core network device sends the downlink data to the target base station.

After receiving the downlink data sent by the source core network device, the target core network device forwards the downlink data to the target base station. For example, in this embodiment, the target MME sends the five data packets: the data packet 1, the data packet 2, the data packet 3, the data packet 4, and the data packet 5 to the target base station.

307. The target base station sends the downlink data to the terminal.

After receiving the downlink data sent by the target core network device, the target base station sends the downlink data to the terminal.

In an actual application, it may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially and continuously received data packets to the core network device.

In this embodiment, the source core network device saves the downlink data of the terminal, so that after the terminal is handed over from the source base station to the target base station, the source core network device sends the saved downlink data to the target core network device, and then uses the target base station to send the downlink data to the terminal. This can ensure that no downlink data is lost during reselection, thereby ensuring data continuity.

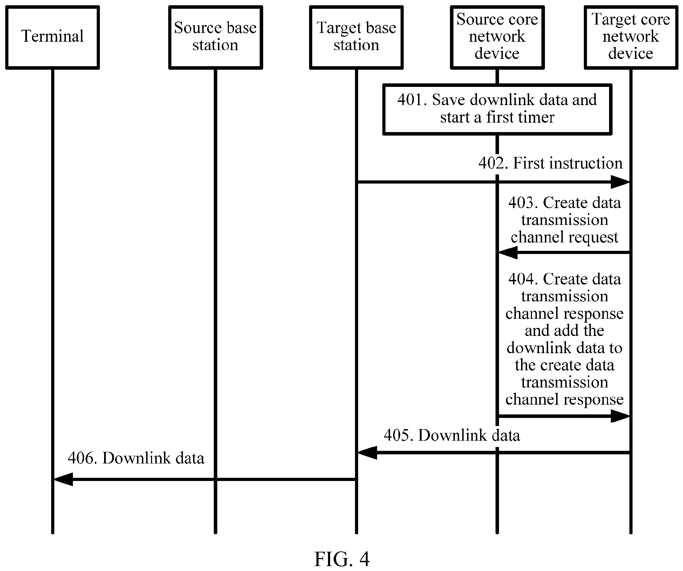

Specifically, referring to FIG. 4, in this embodiment, the terminal performs the cell reselection, the core network device performs data transmission, and a source base station and a target base station are connected to different core network devices.

Step 401 to step 403 are the same as step 301 to step 303. Details are not described herein again.

404. The source core network device sends a create data transmission channel response to the target core network device, and adds the downlink data to the create data transmission channel response.

After receiving the create data transmission channel request sent by the target core network device, the source core network device feeds back, to the target core network device, a create data transmission channel response for indicating that the source core network device allows to create the data transmission channel, and adds the downlink data to the create data transmission channel response.

In this embodiment, the create data transmission channel response may be a create data forwarding tunnel response. Specific signaling is not limited herein.

Step 405 and step 406 are the same as step 306 and step 307. Details are not described herein again.

In this embodiment, the source core network device saves the downlink data of the terminal, so that after the terminal is handed over from the source base station to the target base station, the source core network device sends the saved downlink data to the target core network device, and then uses the target base station to send the downlink data to the terminal. This can ensure that no downlink data is lost during reselection, thereby ensuring data continuity.

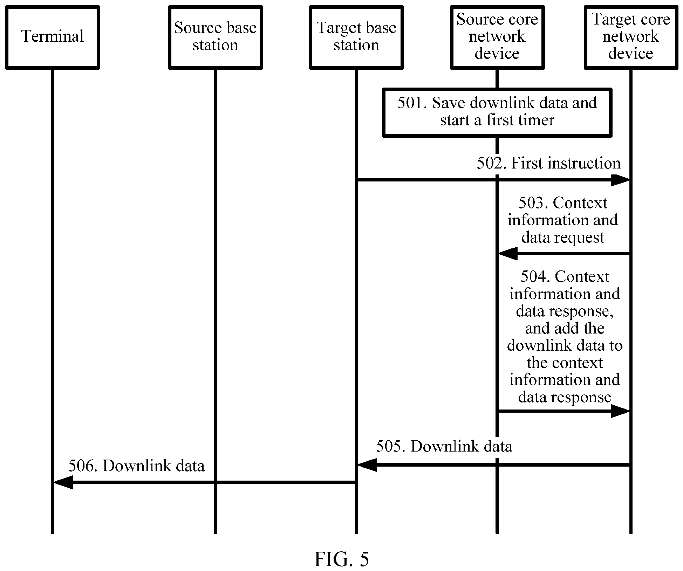

Specifically, referring to FIG. 5, in this embodiment, the terminal performs the cell reselection, the core network device performs data transmission, and a source base station and a target base station are connected to different core network devices.

Step 501 and step 502 are the same as step 301 and step 302. Details are not described herein again.

503. The target core network device sends a context information and data request to the source core network device.

After receiving a first instruction that is sent by the target base station and that is used to instruct the target core network device to request the downlink data from the source core network device, the target core network device may directly send a context information and data request message to the source core network device.

In this embodiment, the context information and data request message may be a context and data request. Specific signaling is not limited herein.

504. The source core network device sends a context information and data response to the target core network device, and adds the downlink data to the context information and data response.

After receiving the context information and data request message sent by the target core network device, the source core network device feeds back, to the target core network device, a context information data response for indicating that the source core network device allows to send context information and the downlink data, and adds the downlink data and the context information to the context information and data response.

In this embodiment, the context information and data response may be a context and data response. Specific signaling is not limited herein.

Step 505 and step 506 are the same as step 306 and step 307. Details are not described herein again.

In this embodiment, the source core network device saves the downlink data of the terminal, so that after the terminal is handed over from the source base station to the target base station, the source core network device sends the saved downlink data to the target core network device, and then uses the target base station to send the downlink data to the terminal. This can ensure that no downlink data is lost during reselection, thereby ensuring data continuity.

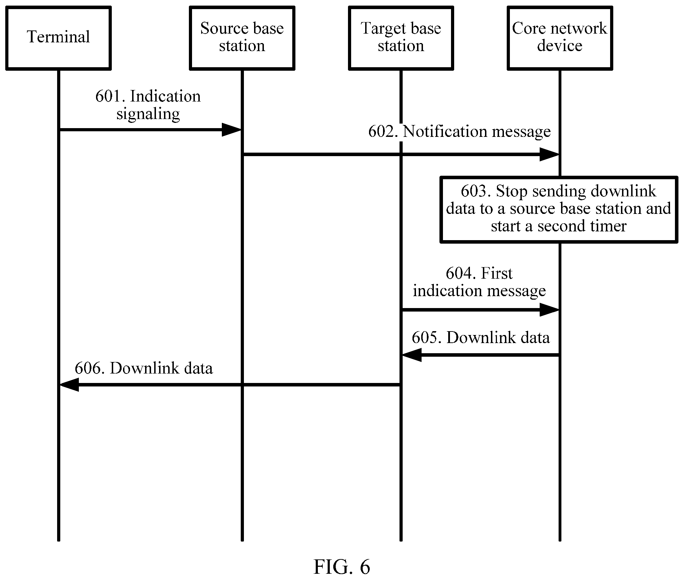

Specifically, referring to FIG. 6, in this embodiment, the terminal performs the cell reselection, the core network device performs data transmission, and a source base station and a target base station are connected to a same core network device.

601. The terminal sends indication signaling to the source base station, where the indication signaling is used to indicate that the terminal is to perform the cell reselection.

Before performing the cell reselection, the terminal sends indication signaling to the source base station, where the indication signaling is used to notify the source base station that the terminal is to perform the cell reselection.

In this embodiment, the indication signaling carries information such as a cell reselection indication, an S-TMSI, and the target base station. The information may be added to an RRC message, for example, an RRC connection setup request or an RRC connection re-establishment request, or may be added to a NAS message, for example, UL information transfer. In this embodiment, an MME is used as an example. To be specific, such information may be used as a NAS layer notification message and added to RRC signaling, or a field may be added to an RRC message, to notify the cell reselection.

602. The source base station sends a notification message to the core network device, where the notification message is used to indicate that the terminal is to perform the cell reselection.

After receiving the indication signaling sent by the terminal, the source base station needs to send, to the core network device, the notification message that is used to notify the core network device that the terminal is to perform the cell reselection.

In this embodiment, the notification message may be UL NAS transport signaling or may be another S1-AP message. Specifically, a NAS layer message may be added to an S1-AP message to notify a core network, or a field may be directly added to an S1-AP message or signaling to indicate to a core network. Specific signaling is not limited herein.

603. The core network device stops sending the downlink data to the source base station and starts a second timer.

After learning that the terminal is to perform the cell reselection, the core network device starts the second timer, and stops sending the downlink data to the source base station.

In this embodiment, operation duration of the first timer is preconfigured. Specific duration is not limited herein. In an actual application, the MME stops sending five data packets: a data packet 1, a data packet 2, a data packet 3, a data packet 4, and a data packet 5 to the source base station.

604. The target base station sends a first indication message to the core network device, where the first indication message is used to indicate that the terminal has completed the cell reselection.

After the terminal is successfully connected to the target base station, the target base station sends the first indication message to the core network device, to notify the core network device that the terminal has completed the cell reselection.

The first indication message in this embodiment may be a message such as an initial UE message or a path switch message that is sent by the target base station to the core network device. A specific message form is not limited herein.

In this embodiment, if the target base station does not send the first indication message to the core network device after the second timer times out, it indicates that the terminal fails to be connected to the target base station. In this case, the terminal resumes sending the downlink data to the source base station. For example, after the second timer times out, if the MME does not receive the message that is sent by the target base station and that indicates that the terminal has completed the cell reselection, the MME restarts to send the five data packets: the data packet 1, the data packet 2, the data packet 3, the data packet 4, and the data packet 5 to the source base station.

605. The core network device sends the downlink data to the target base station.

After receiving the first indication information, the core network device sends, to the target base station, the downlink data that is not sent.

606. The target base station sends the downlink data to the terminal.

The target base station forwards the downlink data to the terminal.

In an actual application, it may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially received data packets to the core network device.

In this embodiment, after receiving the message indicating that the terminal is to perform the cell reselection, the source core network device stops sending the downlink data to the source base station, so that after the terminal is handed over from the source base station to the target base station, the source core network device sends the downlink data to the target core network device, and then uses the target base station to send the downlink data to the terminal. This can ensure that no downlink data is lost during reselection, thereby ensuring data continuity.

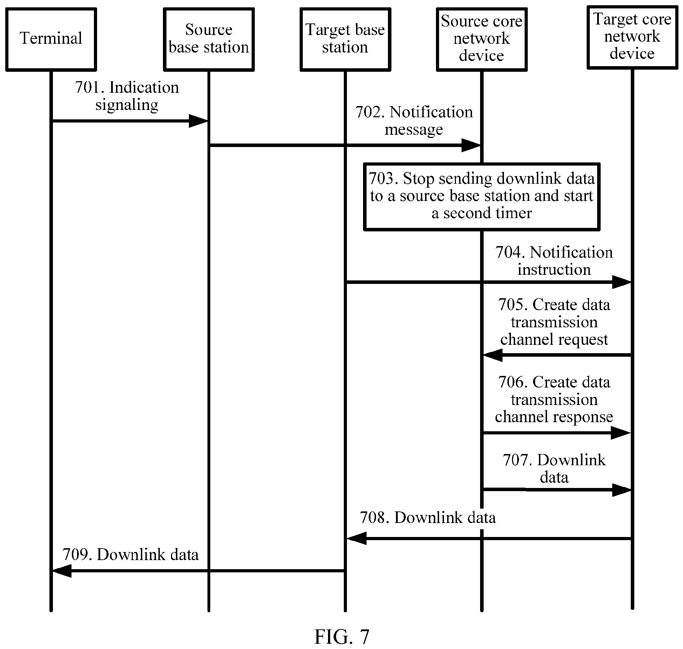

Specifically, referring to FIG. 7, in this embodiment, the terminal performs the cell reselection, the core network device performs data transmission, and a source base station and a target base station are connected to different core network devices.

Step 701 is the same as step 601. Details are not described herein again.

702. The source base station sends a notification message to a source core network device, where the notification message is used to indicate that the terminal is to perform the cell reselection.

After receiving the indication signaling sent by the terminal, the source base station needs to send, to the source core network device, the notification message that is used to notify the source core network device that the terminal is to perform the cell reselection.

In this embodiment, the notification message may be UL NAS transport signaling or may be an S1-AP message. Specific signaling is not limited herein.

703. The source core network device stops sending the downlink data to the source base station and starts a second timer.

After learning that the terminal is to perform the cell reselection, the source core network device starts the second timer, and stops sending the downlink data to the source base station.

In this embodiment, operation duration of the first timer is preconfigured. Specific duration is not limited herein. In an actual application, the source MME stops sending five data packets: a data packet 1, a data packet 2, a data packet 3, a data packet 4, and a data packet 5 to the source base station.

704. The target base station sends a notification instruction to a target core network device, where the notification instruction is used to indicate that the terminal has completed the cell reselection and instruct the target core network device to request data from the source core network device.

After the terminal establishes a connection to the target base station, the target base station sends the notification instruction to the target core network device. The notification instruction is used to indicate that the terminal has completed the cell reselection and instruct the target core network device to request the downlink data from the source core network device.

In this embodiment, the target base station may send an initial UE massage to the target core network device, and the initial UE massage carries a field or an information element for instructing the target core network device to request the downlink data from the source core network device. The initial UE massage can be used as the first instruction only in this case. For example, in this embodiment, the target base station may send an initial UE massage to the target MME, and adds, to the initial UE massage, a field 1100 for instructing the target MME to request, from the source MME, the five data packets: the data packet 1, the data packet 2, the data packet 3, the data packet 4, and the data packet 5.

705. The target core network device sends a create data transmission channel request to the source core network device.

The target core network device sends the create data transmission channel request to the source core network device.

In this embodiment, the create data transmission channel request may be a create data forwarding tunnel request. Specific signaling is not limited herein.

706. The source core network device sends a create data transmission channel response to the target core network device.

After receiving the create data transmission channel request sent by the target core network device, the source core network device feeds back, to the target core network device, a create data transmission channel response for indicating that the source core network device allows to create the data transmission channel.

In this embodiment, the create data transmission channel response may be a create data forwarding tunnel response. Specific signaling is not limited herein.

707. The source core network device sends the downlink data to the target core network device.

After the data transmission channel is created, the source core network device sends the downlink data to the target core network device. For example, the source MME sends the five data packets: the data packet 1, the data packet 2, the data packet 3, the data packet 4, and the data packet 5 to the target MME. When forwarding data to the target core network device, the source core network device may send a last-packet indication, or may send an end data forwarding indication. After receiving indication information of the target base station, the target core network device sends a path switch indication to an S-GW. This indicates that the target MME starts to forward data to UE.

708. The target core network device sends the downlink data to the target base station.

After receiving the downlink data sent by the source core network device, the target core network device forwards the downlink data to the target base station. For example, in this embodiment, the target MME sends the five data packets: the data packet 1, the data packet 2, the data packet 3, the data packet 4, and the data packet 5 to the target base station.

709. The target base station sends the downlink data to the terminal.

After receiving the downlink data sent by the target core network device, the target base station sends the downlink data to the terminal.

In an actual application, after the terminal establishes the connection to the target base station, the target base station sends an initial UE message or a path switch message to the target core network device. The target core network device obtains information about the source MME and the source base station by using the terminal and by using the indication information forwarded by the base station. The target core network device may send a piece of information to the source core network device, to indicate that the terminal has established a connection to the target core network device, and trigger the source core network device to send a create data channel request or a data transmission request. The target core network device replies with a response message. Then the source core network device forwards data to the target core network device. It may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially received data packets to the core network device.

In this embodiment, after receiving the message indicating that the terminal is to perform the cell reselection, the source core network device stops sending the downlink data to the source base station, so that after the terminal is handed over from the source base station to the target base station, the source core network device sends the downlink data to the target core network device, and then uses the target base station to send the downlink data to the terminal. This can ensure that no downlink data is lost during reselection, thereby ensuring data continuity.

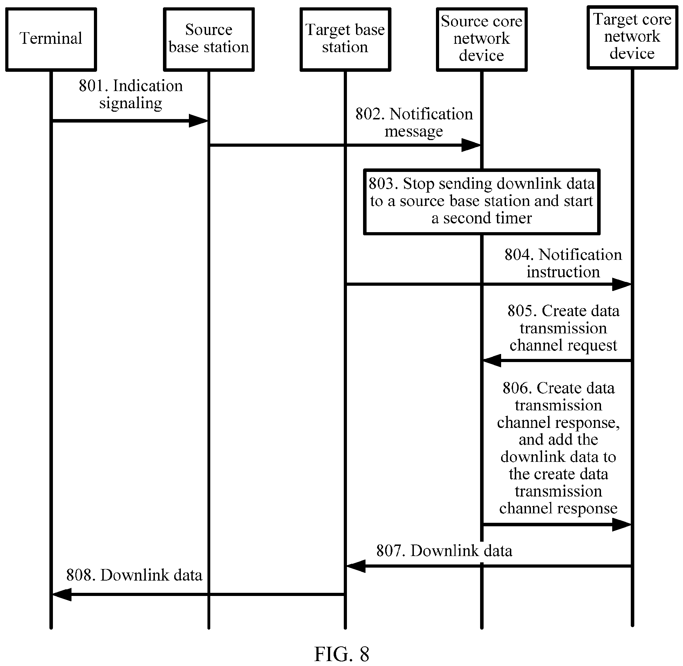

Specifically, referring to FIG. 8, in this embodiment, the terminal performs the cell reselection, the core network device performs data transmission, and a source base station and a target base station are connected to different core network devices.

Step 801 to step 805 are the same as step 701 to step 705. Details are not described herein again.

806. The source core network device sends a create data transmission channel response to the target core network device, and adds the downlink data to the create data transmission channel response.

After receiving the create data transmission channel request sent by the target core network device, the source core network device feeds back, to the target core network device, a create data transmission channel response for indicating that the source core network device allows to create the data transmission channel, and adds the downlink data to the create data transmission channel response.

In this embodiment, the create data transmission channel response may be a create data forwarding tunnel response. Specific signaling is not limited herein.

Step 807 and step 808 are the same as step 708 and step 709. Details are not described herein again.

In this embodiment, after receiving the message indicating that the terminal is to perform the cell reselection, the source core network device stops sending the downlink data to the source base station, so that after the terminal is handed over from the source base station to the target base station, the source core network device sends the downlink data to the target core network device, and then uses the target base station to send the downlink data to the terminal. This can ensure that no downlink data is lost during reselection, thereby ensuring data continuity.

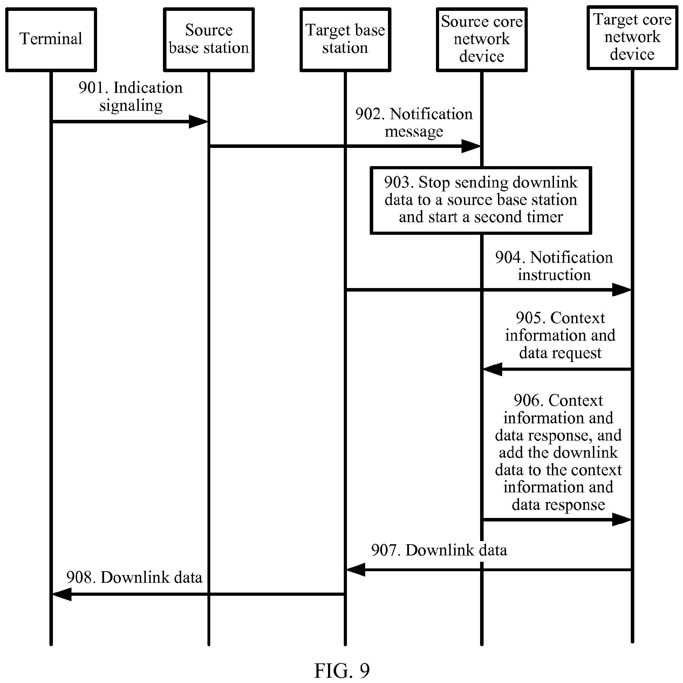

Specifically, referring to FIG. 9, in this embodiment, the terminal performs the cell reselection, the core network device performs data transmission, and a source base station and a target base station are connected to different core network devices.

Step 901 to step 904 are the same as step 701 to step 704. Details are not described herein again.

905. The target core network device sends a context information and data request to the source core network device.

After receiving a first instruction that is sent by the target base station and that is used to instruct the target core network device to request the downlink data from the source core network device, the target core network device may directly send a context information and data request message to the source core network device.

In this embodiment, the context information and data request message may be a context and data request. Specific signaling is not limited herein.

906. The source core network device sends a context information and data response to the target core network device, and adds the downlink data to the context information and data response.

After receiving the context information and data request message sent by the target core network device, the source core network device feeds back, to the target core network device, a context information data response for indicating that the source core network device allows to send context information and the downlink data, and adds the downlink data and the context information to the context information and data response.

In this embodiment, the context information and data response may be a context and data response. Specific signaling is not limited herein.

Step 907 and step 908 are the same as step 708 and step 709. Details are not described herein again.

In this embodiment, after receiving the message indicating that the terminal is to perform the cell reselection, the source core network device stops sending the downlink data to the source base station, so that after the terminal is handed over from the source base station to the target base station, the source core network device sends the downlink data to the target core network device, and then uses the target base station to send the downlink data to the terminal. This can ensure that no downlink data is lost during reselection, thereby ensuring data continuity.

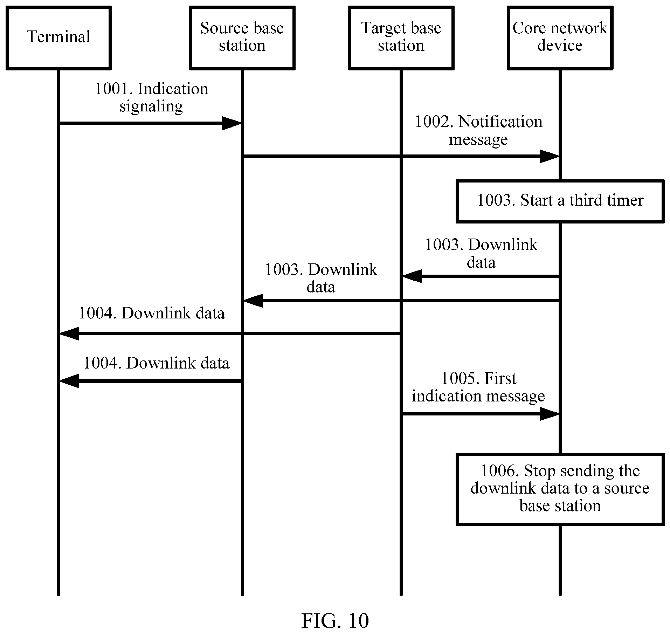

Specifically, referring to FIG. 10, the terminal performs the cell reselection, the core network device performs data transmission, and a source base station and a target base station are connected to a same core network device.

Step 1001 and step 1002 are the same as step 601 and step 602. Details are not described herein again.

1003. The core network device sends the downlink data to the source base station, sends the downlink data to the target base station, and starts a third timer.

After receiving a first indication message that is used to indicate that the terminal is to perform the cell reselection, the core network device may start the third timer. In addition, the core network device may send downlink data to the target base station by using an S 1 interface, and the core network device continues sending the downlink data to the source base station by using the S 1 interface.

1004. The source base station sends the downlink data to the terminal, and the target base station sends the downlink data to the terminal.

After receiving the downlink data sent by the core network device, the target base station may send the downlink data to the terminal after establishing a connection to the terminal. The source base station may send the downlink data to the terminal when the source base station and the terminal remain connected to each other.

In an actual application, if the core network device transmits data in the foregoing manner, the terminal has received a NAS PDU but the source base station does not receive acknowledge information fed back by the terminal, and the target base station sends the NAS PDU again, in other words, the terminal receives two NAS PDUs, because the NAS PDU does not have a number, the terminal may perform an operation on the NAS PDU at a NAS layer by using a NAS count. To be specific, after finding same NAS counts, the terminal deletes a data packet corresponding to the NAS count.

1005. The target base station sends a first indication message to the core network device, where the first indication message indicates that the terminal has completed the cell reselection.

After the terminal is successfully connected to the target base station, the target base station sends the first indication message to the core network device, to notify the core network device that the terminal has completed the cell reselection.

The first indication message in this embodiment may be a message such as an initial UE message or a path switch message that is sent by the target base station to the core network device. A specific message form is not limited herein.

In this embodiment, if the target base station does not send the first indication message to the core network device after the third timer times out, it indicates that the terminal fails to be connected to the target base station. The core network device may stop sending the downlink data to the target base station, and the core network device continues sending the downlink data to the source base station.

1006. The core network device stops sending the downlink data to the source base station.

After learning that the terminal has completed the cell reselection, the core network device stops sending the downlink data to the source base station.

In an actual application, if the source base station still has uplink data sent by the terminal, the source base station continues to send sequentially and continuously received data to the core network device and discards other unacknowledged out-of-order data packets. In addition, after establishing the connection to the target base station, the terminal sends data to the target base station, starting from a first piece of data that is not received. Duplicate data packets are to be processed by the NAS layer.

In this embodiment, after receiving the message indicating that the terminal is to perform the cell reselection, the core network device sends the downlink data to both the source base station and the target base station. This can ensure that no downlink data is lost during reselection, thereby ensuring data continuity.

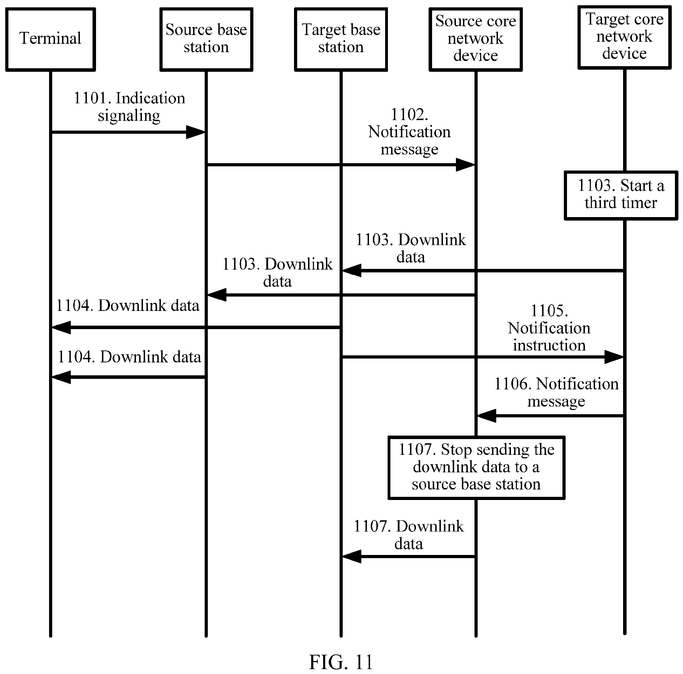

Specifically, referring to FIG. 11, the terminal performs the cell reselection, the core network device performs data transmission, and a source base station and a target base station are connected to different core network devices.

Step 1101 and step 1102 are the same as step 701 and step 702. Details are not described herein again.

1103. The source core network device sends the downlink data to the source base station, and a target core network device sends the downlink data to the target base station and starts a third timer.

The terminal sends indication information to the source core network device by using the source base station. The indication information includes information about the target core network device and the target base station, and includes a specific ID, a cell identifier, and the like. The source core network device finds the target core network device based on the information, sends a create data channel request, and indicates a reason. After receiving a message, the target core network device sends the message to the target base station, indicating a cell reselection or change request. If the target base station determines to allow establishment of a data channel, the target base station adds corresponding configuration information to a response message and sends the response message to the target core network device. After receiving the message of the target base station, the target core network device replies with a create data channel request acknowledgment, forwards the information sent by the target base station to a source core network, and sends, to the terminal, the information sent by the target base station. After receiving an acknowledgment message of the target core network device, the source core network device forwards the downlink data to the target core network device. Optionally, the source core network device may directly send a data transmission request, and a target core network sends response information. The response information may directly carry information about a related configuration performed by the target base station on the terminal. Herein, a GTP protocol is used. After receiving the response information, the source core network device directly transmits data by using signaling.

Optionally, the target core network device starts the third timer after receiving the data. If the target core network device receives, within duration of the third timer, information sent by the terminal by using the target base station, the target core network device instructs the source core network device to stop sending the data to the source base station. If the third timer times out and the target core network device still does not receive connection setup information of the terminal, the target core network device stops sending data to the target base station, and the target base station deletes the related data.

1104. The source base station sends the downlink data to the terminal, and the target base station sends the downlink data to the terminal.

After receiving the downlink data sent by the source core network device, the target base station may send the downlink data to the terminal after establishing a connection to the terminal. The source base station may send the downlink data to the terminal when the source base station and the terminal remain connected to each other.

In an actual application, if the source core network device transmits data in the foregoing manner, the terminal has received a NAS PDU but the source base station does not receive or incorrectly parses acknowledge information fed back by the terminal, and the target base station sends the NAS PDU again, in other words, the terminal receives two NAS PDUs, because the NAS PDU does not have a number, the terminal may perform an operation on the NAS PDU at a NAS layer by using a NAS count. To be specific, after finding same NAS counts, the terminal deletes a data packet corresponding to the NAS count. A same resolving method is used when duplicate packets appear on a core network side.

1105. The target base station sends a notification instruction to the target core network device, and after obtaining the signaling, the target core network device learns that the terminal has completed the cell reselection.

After the terminal is successfully connected to the target base station, the target base station sends a first indication message to the target core network device, to notify the target core network device that the terminal has completed the cell reselection.

The notification instruction in this embodiment may be a message such as an initial UE message or a path switch message that is sent by the target base station to the target core network device. A specific message form is not limited herein.

1106. The target core network device sends a notification message to the source core network device, where the notification message is used to indicate that the terminal has completed the cell reselection.

After learning that the terminal has completed the cell reselection, the target core network device sends, to the source core network device, the notification message indicating that the terminal has completed the cell reselection.

In this embodiment, if the target base station does not send the notification instruction to the target core network device after the third timer times out, it indicates that the terminal fails to be connected to the target base station. In addition, the target core network device does not send the notification message to the source core network device. In this case, the source core network device may stop sending the downlink data to the target base station, and the source core network device continues to send the downlink data to the source base station.

1107. The source core network device stops sending the downlink data to the source base station, and sends the downlink data to the target base station.

After learning that the terminal has completed the cell reselection, the source core network device stops sending the downlink data to the source base station, and stops sending the downlink data to the target base station.

In an actual application, if the source base station still has uplink data sent by the terminal, the source base station continues to send sequentially and continuously received data to the core network device and discards other unacknowledged out-of-order data packets. In addition, after establishing the connection to the target base station, the terminal sends data to the target base station, starting from a first piece of data that is not received.

In this embodiment, after receiving the message indicating that the terminal is to perform the cell reselection, the source core network device sends the downlink data to both the source base station and the target base station. This can ensure that no downlink data is lost during reselection, thereby ensuring data continuity.

Specifically, referring to FIG. 12, the terminal performs the cell reselection, and a base station side performs data transmission.

1201. The target base station sends indication information to a source base station, where the indication information is used to indicate that the terminal has completed the cell reselection.

After the terminal establishes a connection to the target base station, the target base station receives information about the source base station that is sent by the terminal. The target base station may send, to the source base station based on the information about the source base station by using an X2 interface, indication information that is used to indicate that the terminal has completed the cell reselection. A specific message may be a cell reselection indication. Alternatively, a field is added to an RLF indication for indication. The specific message is not limited.

1202. The source base station sends a handover request to the target base station.

After learning that the terminal has completed the cell reselection, the source base station sends a handover request or another X2 message to the target base station.

1203. The target base station sends a handover acknowledgment message to the target base station.

After receiving the handover request of the source base station, the target base station may send a handover acknowledgment message or another X2 message to the source base station. In this way, the target base station and the source base station use handover signaling as connection signaling between the target base station and the source base station.

1204. The source base station sends the downlink data to the target base station.

The source base station sends the downlink data to the target base station by using an X2 interface between the base stations.

In addition, in an actual application, when the target base station and the source base station transmit data to each other, the target base station and the source base station may add an information element to the handover request, for forwarding data. A name of the information element may be data forwarding for NAS PDU. Alternatively, a piece of X2-AP signaling to which forwarding downlink data is added is used between the target base station and the source base station. A name of the information element may be DL data forwarding. Alternatively, when the source base station sends a handover request command (handover request) to the target base station, an information element that is used to indicate that there is data to be sent to the target core network device is added to the handover request. After receiving the handover acknowledgment message sent by the target base station, the source base station further sends, to the target base station, a piece of signaling for transmitting data. In this case, an information element included in the signaling may be data forwarding for NAS PDU. Alternatively, the target base station establishes an X2 bearer corresponding to an SRB 1, a new E-RAB corresponding to an EPS bearer, and a tunnel for carrying data of the E-RAB. After the tunnel is established, the target base station sends a corresponding tunnel address to the source base station, and then the source base station then forwards the data to the target base station by using the tunnel. Herein, the source base station may send the downlink data to the target base station in various manners. This is not limited herein. In addition, after forwarding the data, the source base station sends a last-packet indication or an end data sending indication to the target base station. In this way, the target base station may first send, to the terminal or a core network, the data sent by the source base station, and then send new data obtained from the core network or the terminal, thereby avoiding an out-of-order case.

1205. The target base station sends the downlink data to the terminal.

The target base station sends the downlink data obtained from the source base station to the terminal.

In an actual application, to ensure that all data obtained from the source base station can be sequentially sent, after obtaining the data from the source base station, the target base station exchanges signaling with the target core network device, and receives the downlink data. Alternatively, the target base station first sends the downlink data obtained from source base station, and then receives the downlink data sent by the target core network device. A specific manner is not limited herein.

In this embodiment, the source base station and the target base station transmit data to each other. This can ensure that no downlink data is lost during reselection, thereby ensuring data continuity.

Specifically, referring to FIG. 13, the terminal performs the cell change, the core network device performs data transmission, and a source base station and a target base station are connected to a same core network device.

1301. The core network device saves the downlink data and starts a first timer.

When the core network device is to send the downlink data to the terminal by using the source base station, the core network device saves the to-be-sent downlink data, and starts the first timer.

In this embodiment, operation duration of the first timer is preconfigured. Specific duration is not limited herein. The core network device may be an MME or may be another core network device, for example, an SGW. A specific form is not limited herein, provided that it can be effectively ensured that data is not lost. In this embodiment, for example, the core network device is an MME. Duration of the first timer is 10 seconds. Before the cell reselection, the downlink data to be sent by the MME to the source base station is a data packet 1, a data packet 2, a data packet 3, a data packet 4, and a data packet 5. The MME saves the five data packets, and starts the first timer.

1302. The target base station sends a first indication message to the core network device, where the first indication message is used to indicate that the terminal has completed the cell change.

After the terminal is successfully connected to the target base station, the target base station sends the first indication message to the core network device, to notify the core network device that the terminal has completed the cell change.

In this embodiment, if the terminal needs to be connected to the target base station, the terminal may further add a reason for connecting to the target base station by the terminal, to information such as an RRC connection setup request or an RRC connection re-establishment request. For example, it may indicate that the connection is currently performed because of the cell reselection, or it may indicate that the connection is currently performed because reconnection data is required due to a network interruption, or it may indicate that the connection is currently performed because of the cell change. A specific reason is not limited herein. Specifically, in the NB-IoT, there are two data transmission solutions: a solution of transmission based on a control plane, and a solution of transmission based on a user plane. In the solution based on a control plane, when establishing a connection to a target base station, a terminal may initiate an RRC connection setup request, and add a value of a cell reselection or a value of another reason to the RRC connection setup request. A base station sends an RRC connection setup message to the terminal after receiving a connection setup request. The terminal replies to the base station with an RRC connection setup complete message.

In the solution of data transmission by using a user plane, a terminal may send an RRC connection re-establishment request that carries a value of a cell reselection or a value of another reason. After receiving a connection setup request, a base station sends an RRC connection re-establishment message to the terminal. The terminal replies to the base station with an RRC connection re-establishment complete message.

After establishing an RRC connection to the terminal, the base station sends an initial UE message or a path switch message to the core network device. The message also carries a value of a reason for establishing the connection by the terminal. A core network learns of a specific reason for establishing the connection.

Specifically, in the solution of transmission based on a control plane, if a radio link failure occurs, and the terminal still does not receive a downlink acknowledgment message from the core network device, the terminal may send a notification to a NAS layer, and the NAS layer determines to restore the connection. The terminal sends an RRC connection setup request to the target base station, and adds a value of a reason, to indicate that the connection is to be established currently because an acknowledgment message needs to be received from a side of the core network or because of another reason. The target base station may send the message to the core network by using an initial UE message. In this way, the core network learns of the reason for establishing the connection.

Alternatively, in this scenario, the value of the reason that is added by the terminal when sending the RRC connection setup request is MT, an information element is added to a service request message that is sent when the RRC connection setup request is sent, to indicate a reason for the establishment, and then the reason is sent to the core network by using an initial UE message and by using the base station. In this way, the core network learns of the reason for establishing the connection.

Alternatively, in this scenario, the terminal initiates a tracking area update procedure.

In addition, in an actual application, when the terminal randomly accesses the target base station, the terminal may obtain a configuration of a non-anchor carrier by using specific dedicated signaling or a system broadcast. The dedicated signaling may be a message such as an RRC connection reconfiguration message or an RRC connection release message. The system message may be a system message such as an SIB 1 or an SIB 2. A specific case is not limited herein. A configuration of a random access resource includes information such as duration of the random access resource, a start time of the random access resource, a carrier offset of the random access resource, a subcarrier quantity of the random access resource, a subcarrier start location of a random access resource message 3, a maximum quantity of preamble attempts, a quantity of repetitions of each preamble, a quantity of repetitions of an NPDCCH corresponding to a random access response, a start location of a downlink control channel search space corresponding to the random access response, or an offset of a downlink control channel corresponding to the random access response. The configuration of the non-anchor carrier corresponds to control information of a random access response, and may include information such as a quantity of repetitions of an NPDCCH corresponding to the random access response, a start location of a downlink control channel search space corresponding to the random access response, or an offset of the downlink control channel corresponding to the random access response. A specific case is not limited herein.

The first indication message in this embodiment may be a message such as an initial UE message or a path switch message that is sent by the target base station to the core network device. A specific message form is not limited herein.

In this embodiment, if the target base station does not send the first indication message to the core network device after the first timer times out, it indicates that the terminal fails to be connected to the target base station or that the terminal does not perform the cell reselection during operation of the first timer. In this case, the core network device may delete the saved downlink data. For example, if 10 seconds after the MME saves the five data packets, the MME does not receive the message that is sent by the target base station and that indicates that the terminal has completed the cell reselection, the MME delete the five data packets.

1303. The core network device sends the downlink data to the target base station.

The core network device sends the saved downlink data to the target base station.

In this embodiment, in the process in which the terminal establishes a connection to the target base station, the terminal may further feed back a status of receiving the downlink data. The terminal may feed back the status of receiving the downlink data in the following manners. For example, if the terminal has not completely received the downlink data, feedback information is sent. If the terminal has completely received the downlink data, feedback information is not sent. Certainly, on the contrary, if the terminal has not completely received the downlink data, feedback information may not be sent. If the terminal has completely received the downlink data, feedback information may be sent. The feedback information may be added to RRC connection setup request signaling or RRC connection setup complete signaling. After receiving the feedback information, the target base station may further add the feedback information to an initial terminal information initial UE message or data path switch path switch to be sent to the core network device, in other words, notify the core network device that the terminal has completely received the downlink data or that the terminal has not completely received the downlink data. If the feedback information indicates that the terminal has completely received the downlink data, the core network device may delete the downlink data. If the feedback information indicates that the terminal has not completely received the downlink data, the core network device then sends the downlink data to the terminal by using the target base station. A specific feedback manner and a feedback information sending manner are not limited herein.

In this embodiment, the terminal may determine whether the terminal has received the five data packets. If the terminal completely receives the five data packets: the data packet 1, the data packet 2, the data packet 3, the data packet 4, and the data packet 5, the terminal may notify, by using the target base station, the core network device that the terminal has completely received the five data packets. In this case, the core network device does not need to send the five pieces of data to the terminal by using the target base station. If the terminal determines that the terminal receives only three data packets: the data packet 1, the data packet 2, and the data packet 3, the terminal may notify, by using the target base station, the core network device that the terminal does not completely receive the five data packets. In this case, the terminal may delete the received data packet 1, data packet 2, and data packet 3, and receive again the five data packets: the data packet 1, the data packet 2, the data packet 3, the data packet 4, and the data packet 5 that are sent by the core network device to the terminal by using the target base station. If the terminal determines that the terminal receives only three data packets: the data packet 1, the data packet 2, and the data packet 3, the terminal may feed back numbers or index values of the received NAS packets to the core network device. The core network device may delete first three saved packets, and send a fourth packet and a fifth packet by using the target base station. If the core network device sends only one NAS packet, and the terminal does not completely receive the NAS packet, the terminal sends feedbacks to the core network device, and deletes the NAS packet that is not completely received. The core network device sends the NAS packet again by using the target base station. Specifically, the terminal knows the NAS packet, and may learn of, based on a number of each piece of data, a specific packet that is received. During a feedback, a packet number may be fed back, or a quantity of NAS packets received during a current connection may be fed back. A specific form is not limited.

1304. The target base station sends the downlink data to the terminal.

The target base station forwards the downlink data to the terminal.

In an actual application, it may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially received data packets to the core network device.

In this embodiment, the core network device saves the downlink data of the terminal, so that after the terminal is handed over from the source base station to the target base station, the core network device sends the saved downlink data to the terminal. This can ensure that no downlink data is lost during reselection, thereby ensuring data continuity.

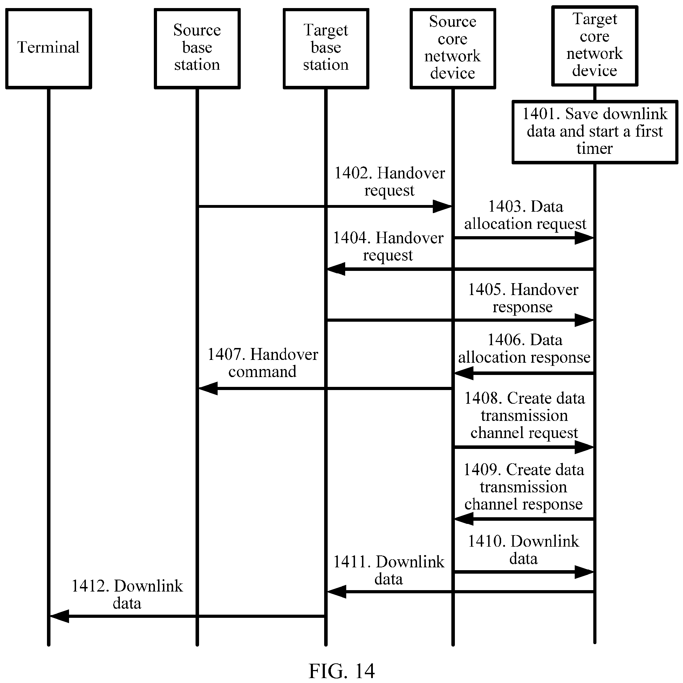

Specifically, referring to FIG. 14, the terminal performs the cell change, the core network device performs data transmission, and a source base station and a target base station are connected to different core network devices.

Step 1401 is the same as step 1301. Details are not described herein again.

1402. The source base station sends a handover request to a source core network device, the handover request includes information about the target base station and information about a target core network device.

After making a handover decision, the source base station sends the handover request to the source core network device. The handover request includes the information about the target base station and the information about the target core network device.

In this embodiment, the handover request may be HO required signaling, or may be represented by other signaling. Specific signaling is not limited herein.

1403. The source core network device sends a data allocation request to the target core network device.

After receiving the handover request, the source core network device sends the data allocation request to the target core network device based on the information about the target core network device.

In this embodiment, the data allocation request may be forward relocation request signaling, or may be other signaling. This is not specifically limited herein.

1404. The target core network device sends a handover request to the target base station.

After receiving the data allocation request, the target core network device sends the handover request to the target base station.

In this embodiment, the handover request may be HO required signaling, or may be represented by other signaling. Specific signaling is not limited herein.

1405. The target base station sends a handover response to the target core network device.

The target base station feeds back the handover response to the target core network device.

In this embodiment, the handover response may be HO response information, or may be represented by other signaling. Specific signaling is not limited herein.

1406. The target core network device sends a data allocation response to the source core network device.

After receiving the handover response fed back by the target base station, the target core network device feeds back the data allocation response to the source core network device.

In this embodiment, the data allocation response may be forward relocation response signaling, or may be other signaling. This is not specifically limited herein.

1407. The source core network device sends a handover command to the source base station.

After receiving the data allocation response fed back by the target core network device, the source core network device notifies the source base station that handover may be performed.

In this embodiment, the handover command may be HO command signaling, or may be other signaling. Specific signaling is not limited herein.

1408. The source core network device sends a create data transmission channel request to the target core network device.

The source core network device sends the create data transmission channel request to the target core network device.

In this embodiment, the create data transmission channel request may be a create indirect data forwarding tunnel request. Specific signaling is not limited herein.

1409. The target core network device sends a create data transmission channel response to the source core network device.

After receiving the create data transmission channel request sent by the source core network device, the target core network device feeds back, to the source core network device, a create data transmission channel response for indicating that the target core network device allows to create the data transmission channel.

In this embodiment, the create data transmission channel response may be a create indirect data forwarding tunnel response. Specific signaling is not limited herein.

1410. The source core network device sends the downlink data to the target core network device.

After the data transmission channel is created, the source core network device sends the downlink data to the target core network device. For example, the source MME sends the five data packets: the data packet 1, the data packet 2, the data packet 3, the data packet 4, and the data packet 5 to the target MME.

1411. The target core network device sends the downlink data to the target base station.

After receiving the downlink data sent by the source core network device, the target core network device forwards the downlink data to the target base station. For example, in this embodiment, the target MME sends the five data packets: the data packet 1, the data packet 2, the data packet 3, the data packet 4, and the data packet 5 to the target base station.

1412. The target base station sends the downlink data to the terminal.

After receiving the downlink data sent by the target core network device, the target base station sends the downlink data to the terminal.

In an actual application, it may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially received data packets to the core network device.

In this embodiment, the source core network device saves the downlink data of the terminal, so that after the terminal is handed over from the source base station to the target base station, the source core network device sends the saved downlink data to the target core network device, and then uses the target base station to send the downlink data to the terminal. This can ensure that no downlink data is lost during reselection, thereby ensuring data continuity.

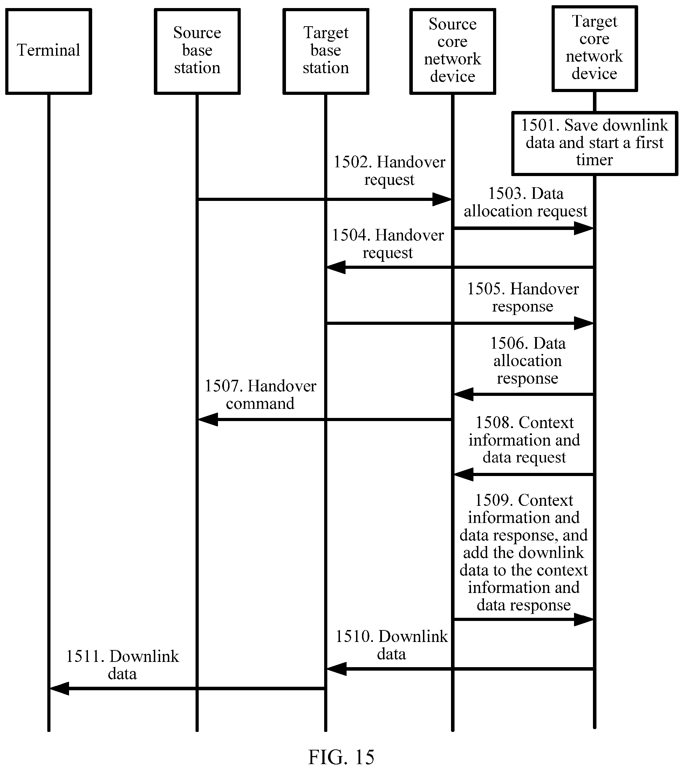

Specifically, referring to FIG. 15, the terminal performs the cell change, the core network device performs data transmission, and a source base station and a target base station are connected to different core network devices.

Step 1501 to step 1507 are the same as step 1401 to step 1407. Details are not described herein again.

1508. The target core network device sends a context information and data request to the source core network device.

After receiving a first instruction that is sent by the target base station and that is used to instruct the target core network device to request the downlink data from the source core network device, the target core network device may directly send a context information and data request message to the source core network device.

In this embodiment, the context information and data request message may be a context and data request. Specific signaling is not limited herein.

1509. The source core network device sends a context information and data response to the target core network device, and adds the downlink data to the context information and data response.

After receiving the context information and data request message sent by the target core network device, the source core network device feeds back, to the target core network device, a context information data response for indicating that the source core network device allows to send context information and the downlink data, and adds the downlink data and the context information to the context information and data response.

In this embodiment, the context information and data response may be a context and data response. Specific signaling is not limited herein.

Step 1510 and step 1511 are the same as step 1411 and 1412. Details are not described herein again.

In this embodiment, the source core network device saves the downlink data of the terminal, so that after the terminal is handed over from the source base station to the target base station, the source core network device sends the saved downlink data to the target core network device, and then uses the target base station to send the downlink data to the terminal. This can ensure that no downlink data is lost during reselection, thereby ensuring data continuity.

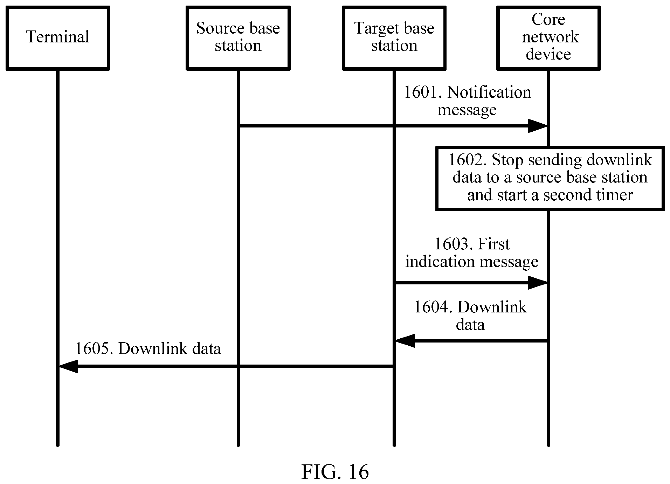

Specifically, referring to FIG. 16, the terminal performs the cell change, the core network device performs data transmission, and a source base station and a target base station are connected to a same core network device.

1601. The source base station sends a notification message to the core network device, where the notification message is used to indicate that the terminal is to perform the cell change.

After making a handover decision, the source base station sends the notification message to the core network device, to notify the core network device that the terminal is to perform the cell change.

In this embodiment, the source base station may send an S 1-AP message to notify the core network device. A name of the signaling may be an HO indication, or other signaling may be used. This is not specifically limited herein.

1602. The core network device stops sending the downlink data to the source base station and starts a second timer.

After learning that the terminal is to perform the cell change, the core network device starts the second timer, and stops sending the downlink data to the source base station.

In this embodiment, operation duration of the first timer is preconfigured. Specific duration is not limited herein. In an actual application, the MME stops sending five data packets: a data packet 1, a data packet 2, a data packet 3, a data packet 4, and a data packet 5 to the source base station.

1603. The target base station sends a first indication message to the core network device, where the first indication message is used to indicate that the terminal has completed the cell change.

After the terminal is successfully connected to the target base station, the target base station sends the first indication message to the core network device, to notify the core network device that the terminal has completed the cell change.

The first indication message in this embodiment may be a message such as an initial UE message or a path switch message that is sent by the target base station to the core network device. A specific message form is not limited herein.

In this embodiment, if the target base station does not send the first indication message to the core network device after the second timer times out, it indicates that the terminal fails to be connected to the target base station. In this case, the terminal resumes sending the downlink data to the source base station. For example, after the second timer times out, if the MME does not receive the message that is sent by the target base station and that indicates that the terminal has completed the cell reselection, the MME restarts to send the five data packets: the data packet 1, the data packet 2, the data packet 3, the data packet 4, and the data packet 5 to the source base station.

1604. The core network device sends the downlink data to the target base station.

After receiving the first indication information, the core network device sends, to the target base station, the downlink data that is not sent.

1605. The target base station sends the downlink data to the terminal.

The target base station forwards the downlink data to the terminal.

In an actual application, it may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially received data packets to the core network device.

In this embodiment, after receiving the message indicating that the terminal is to perform the cell change, the source core network device stops sending the downlink data to the source base station, so that after the terminal is handed over from the source base station to the target base station, the source core network device sends the downlink data to a target core network device, and then uses the target base station to send the downlink data to the terminal. This can ensure that no downlink data is lost during reselection, thereby ensuring data continuity.

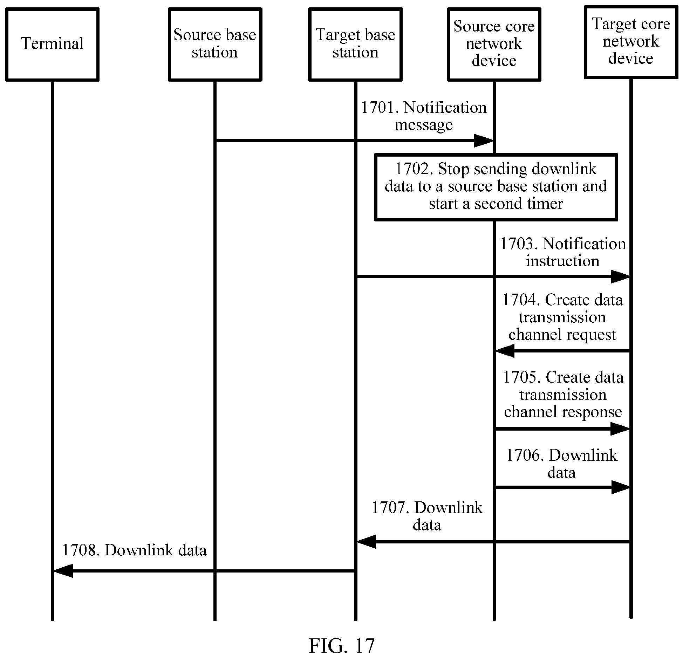

Specifically, referring to FIG. 17, the terminal performs the cell change, the core network device performs data transmission, and a source base station and a target base station are connected to different core network devices.

1701. The source base station sends a notification message to a source core network device, where the notification message is used to indicate that the terminal is to perform the cell change.

After making a change decision, the source base station sends the notification message to the source core network device, to notify the source core network device that the terminal is to perform the cell change.

In this embodiment, the source base station may send an S1-AP message, for example, a UL NAS transport message, to notify the source core network device. A name of the signaling may be an HO indication, or other signaling may be used. This is not specifically limited herein.

1702. The source core network device stops sending the downlink data to the source base station and starts a second timer.

After learning that the terminal is to perform the cell change, the source core network device starts the second timer, and stops sending the downlink data to the source base station.

In this embodiment, operation duration of the first timer is preconfigured. Specific duration is not limited herein. In an actual application, the source MME stops sending five data packets: a data packet 1, a data packet 2, a data packet 3, a data packet 4, and a data packet 5 to the source base station.

1703. The target base station sends a notification instruction to a target core network device, where the notification instruction is used to indicate that the terminal has completed the cell change and instruct the target core network device to request data from the source core network device.

After the terminal establishes a connection to the target base station, the target base station sends the notification instruction to the target core network device. The notification instruction is used to indicate that the terminal has completed the cell change and instruct the target core network device to request the downlink data from the source core network device.

In this embodiment, the target base station may send an initial UE massage to the target core network device, and the initial UE massage carries a field or an information element for instructing the target core network device to request the downlink data from the source core network device. The initial UE massage can be used as the first instruction only in this case. For example, in this embodiment, the target base station may send an initial UE massage to the target MME, and adds, to the initial UE massage, a field 1100 for instructing the target MME to request, from the source MME, the five data packets: the data packet 1, the data packet 2, the data packet 3, the data packet 4, and the data packet 5.

1704. The target core network device sends a create data transmission channel request to the source core network device.

The target core network device sends the create data transmission channel request to the source core network device.

In this embodiment, the create data transmission channel request may be a create data forwarding tunnel request. Specific signaling is not limited herein.

1705. The source core network device sends a create data transmission channel response to the target core network device.

After receiving the create data transmission channel request sent by the target core network device, the source core network device feeds back, to the target core network device, a create data transmission channel response for indicating that the source core network device allows to create the data transmission channel.

In this embodiment, the create data transmission channel response may be a create data forwarding tunnel response. Specific signaling is not limited herein.

1706. The source core network device sends the downlink data to the target core network device.

After the data transmission channel is created, the source core network device sends the downlink data to the target core network device. For example, the source MME sends the five data packets: the data packet 1, the data packet 2, the data packet 3, the data packet 4, and the data packet 5 to the target MME.

1707. The target core network device sends the downlink data to the target base station.

After receiving the downlink data sent by the source core network device, the target core network device forwards the downlink data to the target base station. For example, in this embodiment, the target MME sends the five data packets: the data packet 1, the data packet 2, the data packet 3, the data packet 4, and the data packet 5 to the target base station.

1708. The target base station sends the downlink data to the terminal.

After receiving the downlink data sent by the target core network device, the target base station sends the downlink data to the terminal.

In an actual application, it may be further determined how the terminal sends uplink data to the core network device by using the target base station. After establishing the connection to the target base station, the terminal performs sending to the target base station, starting from a first data packet for which a receiving acknowledgment sent by the source base station is not received. When the terminal starts to establish the connection to the target base station, the source base station may send sequentially received data packets to the core network device.

Optionally, the target core network device may send a cell change complete indication first, to trigger the source core network device to send a create data path message or send a data and context request message and receive response information of the target core network device. The data may be added to the request for sending, or may be sent after the response is received.

In this embodiment, after receiving the message indicating that the terminal is to perform the cell change, the source core network device stops sending the downlink data to the source base station, so that after the terminal is handed over from the source base station to the target base station, the source core network device sends the downlink data to the target core network device, and then uses the target base station to send the downlink data to the terminal. This can ensure that no downlink data is lost during reselection, thereby ensuring data continuity.

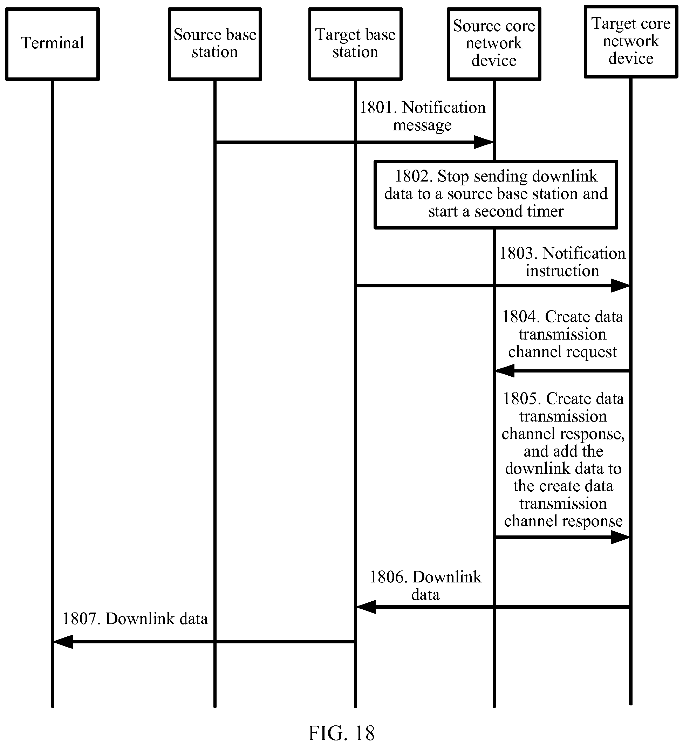

Specifically, referring to FIG. 18, the terminal performs the cell change, the core network device performs data transmission, and a source base station and a target base station are connected to different core network devices.

Step 1801 to step 1804 are the same as step 1701 to step 1704. Details are not described herein again.

1805. The source core network device sends a create data transmission channel response to the target core network device, and adds the downlink data to the create data transmission channel response.

After receiving the create data transmission channel request sent by the target core network device, the source core network device feeds back, to the target core network device, a create data transmission channel response for indicating that the source core network device allows to create the data transmission channel, and adds the downlink data to the create data transmission channel response.

In this embodiment, the create data transmission channel response may be a create data forwarding tunnel response. Specific signaling is not limited herein.

Step 1806 and step 1807 are the same as step 1707 and 1708. Details are not described herein again.

In this embodiment, after receiving the message indicating that the terminal is to perform the cell change, the source core network device stops sending the downlink data to the source base station, so that after the terminal is handed over from the source base station to the target base station, the source core network device sends the downlink data to the target core network device, and then uses the target base station to send the downlink data to the terminal. This can ensure that no downlink data is lost during reselection, thereby ensuring data continuity.

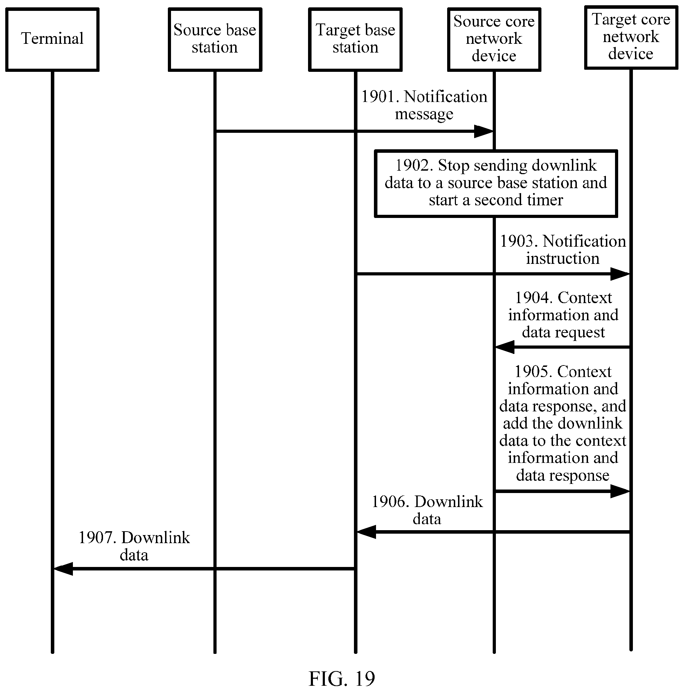

Specifically, referring to FIG. 19, the terminal performs the cell change, the core network device performs data transmission, and a source base station and a target base station are connected to different core network devices.

Step 1901 to step 1903 are the same as step 1701 to step 1703. Details are not described herein again.

1904. The target core network device sends a context information and data request to the source core network device.

After receiving a first instruction that is sent by the target base station and that is used to instruct the target core network device to request the downlink data from the source core network device, the target core network device may directly send a context information and data request message to the source core network device.

In this embodiment, the context information and data request message may be a context and data request. Specific signaling is not limited herein.

1905. The source core network device sends a context information and data response to the target core network device, and adds the downlink data to the context information and data response.

After receiving the context information and data request message sent by the target core network device, the source core network device feeds back, to the target core network device, a context information data response for indicating that the source core network device allows to send context information and the downlink data, and adds the downlink data and the context information to the context information and data response.

In this embodiment, the context information and data response may be a context and data response. Specific signaling is not limited herein.

Step 1906 and step 1907 are the same as step 1707 and step 1708. Details are not described herein again.

In this embodiment, after receiving the message indicating that the terminal is to perform the cell change, the source core network device stops sending the downlink data to the source base station, so that after the terminal is handed over from the source base station to the target base station, the source core network device sends the downlink data to the target core network device, and then uses the target base station to send the downlink data to the terminal. This can ensure that no downlink data is lost during reselection, thereby ensuring data continuity.

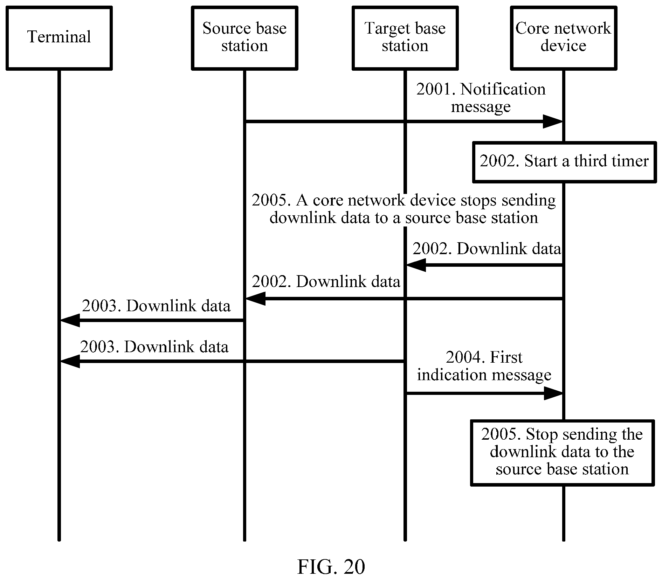

Specifically, referring to FIG. 20, the terminal performs the cell change, the core network device performs data transmission, and a source base station and a target base station are connected to a same core network device.

Step 2001 is the same as step 1601. Details are not described herein again.

2002. The core network device sends the downlink data to the source base station, sends the downlink data to the target base station, and starts a third timer.

After receiving a first indication message that is used to indicate that the terminal is to perform the cell change, the core network device may start the third timer. In addition, the core network device may send the downlink data to the target base station by using an S1 interface, and the core network device continues sending the downlink data to the source base station by using the S1 interface.

2003. The source base station sends the downlink data to the terminal, and the target base station sends the downlink data to the terminal.

After receiving the downlink data sent by the core network device, the target base station may send the downlink data to the terminal after establishing a connection to the terminal. The source base station may send the downlink data to the terminal when the source base station and the terminal remain connected to each other.

In an actual application, if the core network device transmits data in the foregoing manner, the terminal has received a NAS PDU but the source base station does not receive acknowledge information fed back by the terminal, and the target base station sends the NAS PDU again, in other words, the terminal receives two NAS PDUs, because the NAS PDU does not have a number, the terminal may perform an operation on the NAS PDU at a NAS layer by using a NAS count. To be specific, after finding same NAS counts, the terminal deletes a data packet corresponding to the NAS count.

2004. The target base station sends a first indication message to the core network device, where the first indication message indicates that the terminal has completed the cell change.

After the terminal is successfully connected to the target base station, the target base station sends the first indication message to the core network device, to notify the core network device that the terminal has completed the cell change.

The first indication message in this embodiment may be a message such as an initial UE message or a path switch message that is sent by the target base station to the core network device. A specific message form is not limited herein.

In this embodiment, if the target base station does not send the first indication message to the core network device after the third timer times out, it indicates that the terminal fails to be connected to the target base station. The core network device may stop sending the downlink data to the target base station, and the core network device continues sending the downlink data to the source base station.

2005. The core network device stops sending the downlink data to the source base station.

After learning that the terminal has completed the cell change, the core network device stops sending the downlink data to the source base station.

In an actual application, if the source base station still has uplink data sent by the terminal, the source base station continues to send sequentially and continuously received data to the core network device and discards other unacknowledged out-of-order data packets. In addition, after establishing the connection to the target base station, the terminal sends data to the target base station, starting from a first piece of data that is not received.

In this embodiment, after receiving the message indicating that the terminal is to perform the cell change, the core network device sends the downlink data to both the source base station and the target base station. This can ensure that no downlink data is lost during reselection, thereby ensuring data continuity.

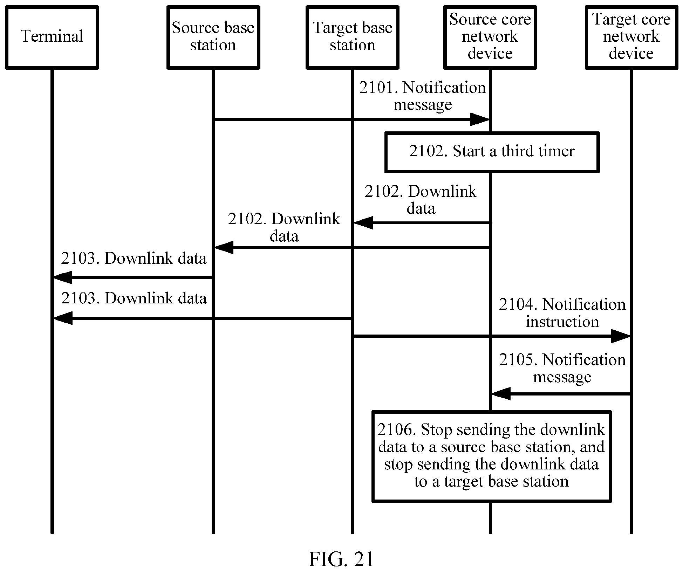

Specifically, referring to FIG. 21, the terminal performs the cell change, the core network device performs data transmission, and a source base station and a target base station are connected to different core network devices.

Step 2101 is the same as step 1701. Details are not described herein again.

2102. The source core network device sends the downlink data to the source base station, sends the downlink data to the target base station, and starts a third timer.

After receiving a first indication message that is used to indicate that the terminal is to perform the cell change, the source core network device may start the third timer. In addition, the source core network device may send the downlink data to the target base station by using an S 1 interface, and the source core network device continues sending the downlink data to the source base station by using the S1 interface.

2103. The source base station sends the downlink data to the terminal, and the target base station sends the downlink data to the terminal.

After receiving the downlink data sent by the source core network device, the target base station may send the downlink data to the terminal after establishing a connection to the terminal. The source base station may send the downlink data to the terminal when the source base station and the terminal remain connected to each other.

In an actual application, if the source core network device transmits data in the foregoing manner, the terminal has received a NAS PDU but the source base station does not receive acknowledge information fed back by the terminal, and the target base station sends the NAS PDU again, in other words, the terminal receives two NAS PDUs, because the NAS PDU does not have a number, the terminal may perform an operation on the NAS PDU at a NAS layer by using a NAS count. To be specific, after finding same NAS counts, the terminal deletes a data packet corresponding to the NAS count.

2104. The target base station sends a notification instruction to a target core network device, where the notification instruction is used to indicate that the terminal has completed the cell change.

After the terminal is successfully connected to the target base station, the target base station sends a first indication message to the target core network device, to notify the target core network device that the terminal has completed the cell change.

The notification instruction in this embodiment may be a message such as an initial UE message or a path switch message that is sent by the target base station to the target core network device. A specific message form is not limited herein.

2105. The target core network device sends a notification message to the source core network device, where the notification message is used to indicate that the terminal has completed the cell change.

After learning that the terminal has completed the cell change, the target core network device sends, to the source core network device, the notification message indicating that the terminal has completed the cell change.

In this embodiment, if the target base station does not send the notification instruction to the target core network device after the third timer times out, it indicates that the terminal fails to be connected to the target base station. In addition, the target core network device does not send the notification message to the source core network device. In this case, the source core network device may stop sending the downlink data to the target base station, and the source core network device continues to send the downlink data to the source base station.

2106. The source core network device stops sending the downlink data to the source base station, and stops sending the downlink data to the target base station.

After learning that the terminal has completed the cell change, the source core network device stops sending the downlink data to the source base station, and stops sending the downlink data to the target base station.

In an actual application, if the source base station still has uplink data sent by the terminal, the source base station continues to send sequentially and continuously received data to the core network device and discards other unacknowledged out-of-order data packets. In addition, after establishing the connection to the target base station, the terminal sends data to the target base station, starting from a first piece of data that is not received.

In this embodiment, after receiving the message indicating that the terminal is to perform the cell change, the source core network device sends the downlink data to both the source base station and the target base station. This can ensure that no downlink data is lost during reselection, thereby ensuring data continuity.

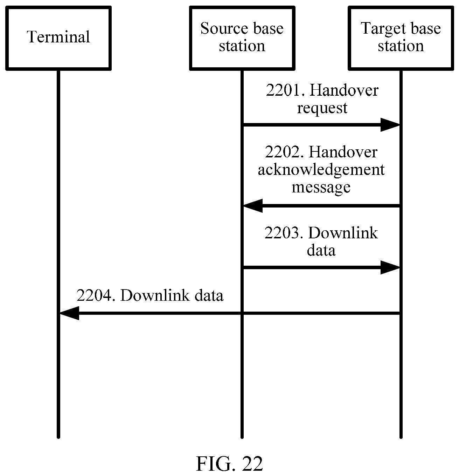

Specifically, referring to FIG. 22, the terminal performs the cell change, and a base station side performs data transmission.

2201: The source base station sends a handover request to the target base station.

After making a handover decision, the source base station sends the handover request to the target base station.

2202. The target base station sends a handover acknowledgment message to the target base station.

After receiving the handover request of the source base station, the target base station may send a handover acknowledgment message to the source base station. In this way, the target base station and the source base station use handover signaling as connection signaling between the target base station and the source base station.

2203. The source base station sends the downlink data to the target base station.

The source base station sends the downlink data to the target base station by using an X2 interface between the base stations.

In addition, in an actual application, when the target base station and the source base station transmit data to each other, the target base station and the source base station may add an information element to the handover request, for forwarding data. A name of the information element may be data forwarding for NAS PDU. Alternatively, a piece of X2-AP signaling to which forwarding downlink data is added is used between the target base station and the source base station. A name of the information element may be DL data forwarding. Alternatively, when the source base station sends a handover request command (handover request) to the target base station, an information element that is used to indicate that there is data to be sent to the target core network device is added to the handover request. After receiving the handover acknowledgment message sent by the target base station, the source base station further sends, to the target base station, a piece of signaling for transmitting data. In this case, an information element included in the signaling may be data forwarding for NAS PDU. Alternatively, the target base station establishes an X2 bearer corresponding to an SRB 1, a new E-RAB corresponding to an EPS bearer, and a tunnel for carrying data of the E-RAB. After the tunnel is established, the target base station sends a corresponding tunnel address to the source base station, and then the source base station forwards the data to the target base station by using the tunnel. Herein, the source base station may send the downlink data to the target base station in various manners. This is not limited herein.

2204. The target base station sends the downlink data to the terminal.

The target base station sends the downlink data obtained from the source base station to the terminal.

In an actual application, to ensure that all data obtained from the source base station can be sequentially sent, after obtaining the data from the source base station, the target base station exchanges signaling with the target core network device, and receives the downlink data. Alternatively, the target base station first sends the downlink data obtained from source base station, and then receives the downlink data sent by the target core network device. A specific manner is not limited herein.

In this embodiment, the source base station and the target base station transmit data to each other. This can ensure that no downlink data is lost during reselection, thereby ensuring data continuity.

Based on the foregoing description of the data processing method, in addition to maintaining mobility of the terminal in connected mode, the embodiments of this application may further provide the following solution to reduce power consumption of the terminal in connected mode.

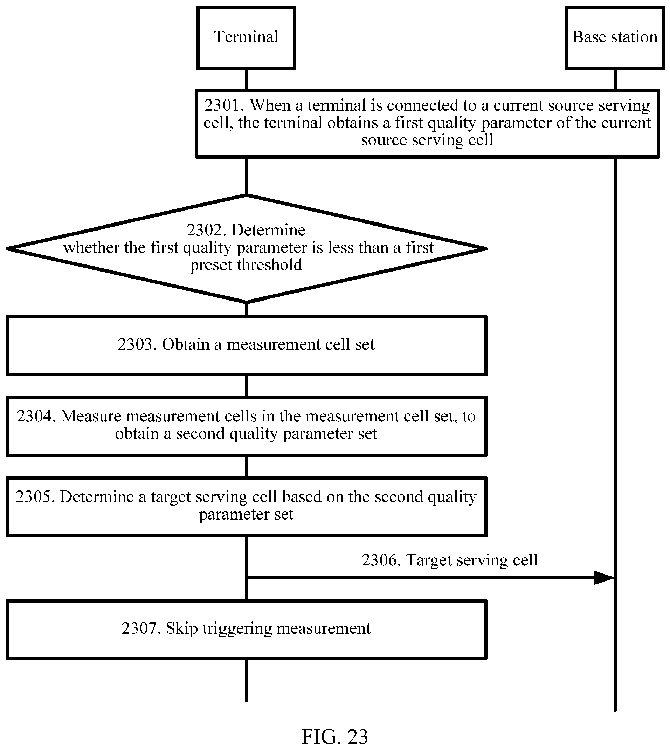

Specifically, referring to FIG. 23, an embodiment of this application provides a cell obtaining method, including the following steps.

2301. When a terminal is connected to a current source serving cell, the terminal obtains a first quality parameter of the current source serving cell.

When the terminal is connected to the current source serving cell, the terminal may obtain the first quality parameter of the current source serving cell in real time.

In this embodiment, the first quality parameter may be reference signal received quality or reference signal received power. A specific determining criterion is not limited herein. In an actual application, when the terminal is connected to the current source serving cell, in other words, when the terminal exchanges data or signaling with a base station corresponding to the current source serving cell, the terminal may obtain the reference signal received power or the reference signal received quality of the current source serving cell to determine the first quality parameter of the current source serving cell.

2302. The terminal determines whether the first quality parameter is less than a first preset threshold, and if yes, perform step 2303 to step 2305, or if no, perform step 2306.

After obtaining the first quality parameter, the terminal determines whether the first quality parameter is less than the first preset threshold. If the first quality parameter is less than the first preset threshold, the terminal performs step 2303 to step 2305. If the first quality parameter is not less than the first preset threshold, the terminal performs step 2306.

In an actual application, the terminal in connected mode may preset a threshold for determining whether a quality parameter of the current source serving cell meets a condition in which the terminal can execute a service in the current source serving cell. After obtaining the quality parameter of the current source serving cell, the terminal compares the quality parameter with the threshold.

2303. The terminal obtains a measurement cell set.

The terminal determines a cell that may be measured by the terminal and generates a measurement cell set.

In this embodiment, the terminal may use a cell whose quality parameter is obtained through measurement in idle mode and greater than or equal to a preset threshold as a measurement cell; or may use a cell previously connected to the terminal within preset duration as the measurement cell; or may use a cell whose signal quality that is saved by the terminal within preset duration reaches a preset threshold as the measurement cell; or may use a cell in a cell list in a broadcast message sent by a base station connected to the terminal as the measurement cell or use a cell related to frequency information in the cell list as the measurement cell. A specific manner is not limited herein, provided that the terminal can obtain an appropriate measurement cell set. The terminal may obtain the broadcast message in idle mode or in connected mode. This is not specifically limited herein. For example, the terminal measures 20 cells in the idle state. Quality parameters of a cell A, a cell B, and a cell C each are greater than a preset threshold 80. In addition, cells connected to the terminal in recent two days include a cell D, a cell E, and a cell F. Cells whose quality parameters obtained through measurement by the terminal in recent two days each are greater than 80 include a cell G and a cell H. Cells in a cell list in a broadcast message sent by the base station and received by the terminal include the cell A to the cell H. Cells related to frequency information in a broadcast message sent by the base station and received by the terminal include the cell B, the cell C, the cell D, and the cell E. In this case, the measurement cell set determined by the terminal includes at least one of the cell A to the cell H.

In addition, if a quantity of measurement cells in the measurement cell set determined by the terminal is less than a quantity of cells in the cell list or/and a quantity of cells related to the frequency information:

2304. The terminal measures measurement cells in the measurement cell set, to obtain a second quality parameter set.

The terminal measures the measurement cells in the measurement cell set one by one, to obtain second quality parameters of the measurement cells, and generates the second quality parameter set by using the second quality parameters.

In an actual application, the terminal may measure the measurement cells in the following manners:

In a possible implementation, the terminal measures reference signal received power of the measurement cells by using at least one measurement manner of intra-frequency measurement, inter-frequency measurement, and inter-system measurement, to obtain the second quality parameters.

In another possible implementation, the terminal measures reference signal received quality of the measurement cells by using at least one measurement manner of intra-frequency measurement, inter-frequency measurement, and inter-system measurement, to obtain the second quality parameters.

2305. The terminal determines a target serving cell based on the second quality parameter set.

The terminal determines the target serving cell from the measurement cell set based on the second quality parameters in the second quality parameter set.

In an actual application, the terminal may use a measurement cell whose second quality parameter is greater than a preset threshold as the target serving cell, or the terminal selects a measurement cell whose second quality parameter is the best as the target serving cell. For example, the measurement cell set determined by the terminal includes a cell A, a cell B, a cell D, and a cell E. It is learned through measurement that a second quality parameter of the cell A is 87, a second quality parameter of the cell B is 85, a second quality parameter of the cell D is 75, and a second quality parameter of the cell E is 81. If the preset threshold is 85, the terminal may use the cell A and the cell B as target serving cells or may use the cell A as the target serving cell.

After measuring the measurement cell and the serving cell, the terminal obtains the first quality parameter and the second quality parameter, and the terminal may also determine the target cell based on a cell reselection rule, for example, a ranking mechanism or a priority mechanism. For example, each cell or each cell related to a frequency may add, during the cell reselection, a compensation value or an offset based on a specific supported service. In addition, the compensation value or the offset may be a default value preset by each cell or each cell related to a frequency and the terminal. Alternatively, the terminal may obtain the compensation value or the offset by receiving a system message broadcast by the base station. Alternatively, the terminal may obtain the compensation value or the offset by receiving dedicated signaling. After the terminal obtains the compensation value or the offset, when the terminal executes a target service and is performing the cell reselection, the terminal may preferentially select a cell that supports the target service. For example, the cell A supports an SC-PTM service. A compensation value or an offset for supporting the SC-PTM service is broadcast in a system broadcast. UE uses the ranking mechanism when performing the cell reselection. When the UE performs calculation on the cell, the UE adds the compensation value or the offset, so that the terminal can select the cell A. Optionally, if a cell in which a terminal supporting SC-PTM is currently located does not support the SC-PTM service, even if signal quality or a signal level of the current serving cell does not trigger measurement or reselection, if it is learned, by using a system broadcast or in another manner, that a cell or a frequency supports the SC-PTM, measurement is triggered, and ranking and reselection are performed, or the target cell or a cell of the frequency is directly measured, and if a threshold requirement is met, the reselection is performed.

Optionally, if UE supporting SC-PTM learns, by using a system broadcast or in another manner, that a cell or a frequency supports the SC-PTM, measurement is triggered and a cell reselection rule is used to perform the cell reselection, or the target cell or a cell of the frequency is directly measured, and if a threshold meets the reselection, or a threshold is maintained, the cell is reselected. Alternatively, a cell supporting the service is found, the cell is reselected.

2306. The terminal sends information about the target serving cell to a base station.

After determining the target serving cell, the terminal sends an index or an ID of the target serving cell to a base station currently connected to the terminal. For example, in this embodiment, the terminal may send an index or a cell ID of the cell A to the base station. Alternatively, the terminal may send indexes or cell IDs of the cell A and the cell B to the base station.

2307. The terminal skips triggering measurement.

The terminal maintains the connection to the current source serving cell, and does not perform cell measurement.

In this embodiment, the terminal determines the target serving cell, and no longer report information such as measurement data to the base station, thereby reducing power consumption of the terminal.

The foregoing describes the data processing method in the embodiments of this application. The following describes the base station and the core network device in the embodiments of this application.

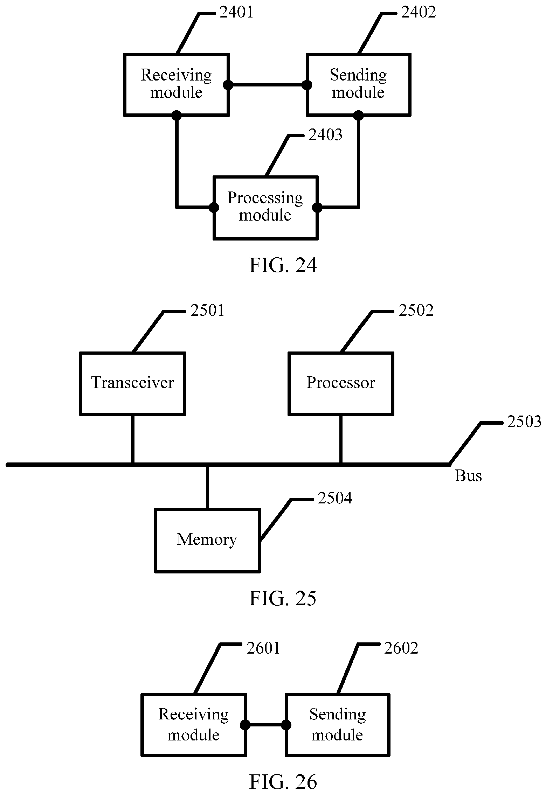

Specifically, referring to FIG. 24, an embodiment of a core network device according to the embodiments of this application includes:
a receiving module 2401 and a sending module 2402.

The receiving module 2401 is configured to obtain a first indication message, where the first indication message is used to indicate that a terminal completes a cell change or a cell reselection.

The sending module 2402 is configured to send downlink data to a target base station, where the target base station is a base station to which the terminal is connected after completing the cell change or the cell reselection.

With reference to the foregoing embodiment, the core network device further includes a processing module 2403. The processing module 2403 is configured to: save the downlink data, and start a first timer, where the downlink data is downlink data to be sent by the core network device to a source base station, and the source base station is a base station to which the terminal is connected before completing the cell change or completing the cell reselection.

The receiving module 2401 is further configured to obtain the first indication message when the first timer does not time out.

With reference to the foregoing embodiment, the processing module 2403 is further configured to delete the saved downlink data if the first timer times out and the receiving module does not obtain the first indication message.

With reference to the foregoing embodiment, the receiving module 2401 is further configured to receive feedback information of the terminal.

The processing module 2403 is further configured to: delete the downlink data if the feedback information indicates that the terminal has completely received the downlink data; or if the feedback information indicates that the terminal does not completely receive the downlink data, trigger sending of the downlink data to the target base station.

With reference to the foregoing embodiment, the receiving module 2401 is further configured to receive indication signaling. The indication signaling is used to indicate that the terminal is to perform the cell reselection or that the terminal is to perform the cell change.

The processing module 2403 is further configured to: stop sending the downlink data to the source base station, and start a second timer. The downlink data is downlink data to be sent by the core network device to the source base station.

The receiving module 2401 is further configured to obtain the first indication message when the second timer does not time out.

With reference to the foregoing embodiment, the processing module 2403 is further configured to: if the second timer times out and the receiving module does not obtain the first indication message, resume sending of the downlink data to the source base station.

With reference to the foregoing embodiment, the receiving module 2401 is further configured to receive the indication signaling.

The sending module 2402 is further configured to: start to send the downlink data to the target base station, and keep sending the downlink data to the source base station. The downlink data is downlink data to be sent by the core network device to the source base station.

The processing module 2403 is further configured to start a third timer.

The receiving module 2401 is further configured to obtain the first indication message when the third timer does not time out.

The sending module 2402 is further configured to: send the downlink data to the target base station, and stop sending the downlink data to the source base station.

With reference to the foregoing embodiment, the processing module 2403 is further configured to delete the saved downlink data if the first timer times out and the receiving module does not obtain the first indication message.

With reference to the foregoing embodiment, the receiving module 2401 is further configured to receive feedback information of the terminal.

The processing module 2403 is further configured to: delete the downlink data if the feedback information indicates that the terminal has completely received the downlink data; or if the feedback information indicates that the terminal does not completely receive the downlink data, trigger sending of the downlink data to the target base station.

With reference to the foregoing embodiment, the processing module 2403 is further configured to: if the first indication message is not obtained after the third timer times out, stop sending the downlink data to the target base station.

Further, a server in FIG. 24 may be further configured to perform any step performed by the core network device in any one of FIG. 1 to FIG. 22, and implement any function that can be implemented by the core network device in any one of FIG. 1 to FIG. 22.

In this embodiment, after the receiving module 2401 receives the message indicating that the terminal completes the cell reselection or the cell change, the sending module 2402 sends the downlink data to the target base station. This can effectively ensure that the terminal can completely receive, after accessing the target base station, the downlink data that is not completely received before the handover or the reselection, in other words, effectively ensure that the downlink data of the terminal is not lost, thereby ensuring mobility of the terminal in connected mode.

Specifically, referring to FIG. 25, another embodiment of a core network device according to the embodiments of this application includes:
a transceiver 2501 and a processor 2502, where the transceiver 2501 and the processor 2502 are connected to each other by using a bus 2503.

The bus 2503 may be a peripheral component interconnect (peripheral component interconnect, PCI for short) bus, an extended industry standard architecture (extended industry standard architecture, EISA for short) bus, or the like. The bus may include an address bus, a data bus, a control bus, and the like. For ease of representation, the bus in FIG. 25 is represented by using only one bold line, but it does not indicate that there is only one bus or only one type of bus.

The processor 2502 may be a central processing unit (central processing unit, CPU for short), a network processor (network processor, NP for short), or a combination of a CPU and an NP.

The processor 2502 may further include a hardware chip. The hardware chip may be an application-specific integrated circuit (application-specific integrated circuit, ASIC for short), a programmable logic device (programmable logic device, PLD for short), or a combination thereof. The foregoing PLD may be a complex programmable logic device (complex programmable logic device, CPLD for short), a field-programmable logic gate array (field-programmable gate array, FPGA for short), a generic array logic (generic array logic, GAL for short), or any combination thereof.

As shown in FIG. 25, the core network device may further include a memory 2504. The memory 2504 is configured to save downlink data. The memory 2504 may include a volatile memory (volatile memory), such as a random-access memory (random-access memory, RAM for short). The memory may further include a non-volatile memory (non-volatile memory), such as a flash memory (flash memory), a hard disk drive (hard disk drive, HDD for short), or a solid-state drive (solid-state drive, SSD for short). The memory 2504 may further include a combination of the foregoing types of memories.

Optionally, the memory 2504 may be further configured to store a program instruction. The processor 2502 may invoke the program instruction stored in the memory 2504, to perform one or more steps in the embodiment shown in any one of FIG. 1 to FIG. 22, or an optional implementation thereof, to implement the function of behavior of the core network device in the foregoing method.

With reference to the foregoing embodiment, the transceiver 2501 corresponds to the receiving module 2401 and the sending module 2402 in the core network device. The transceiver 2501 performs the steps of receiving and sending data or signaling by the core network device in the foregoing embodiment.

With reference to the foregoing embodiment, the processor 2502 corresponds to the processing module 2403 in the core network device. The processing 2502 performs the steps performed by the processing module 2403 of the core network device in the foregoing embodiment.

In this embodiment, after the transceiver 2501 receives the message indicating that the terminal completes the cell reselection or the cell change, the transceiver 2501 sends the downlink data to the target base station. This can effectively ensure that the terminal can completely receive, after accessing the target base station, the downlink data that is not completely received before the handover or the reselection, in other words, effectively ensure that the downlink data of the terminal is not lost, thereby ensuring mobility of the terminal in connected mode.

Specifically, referring to FIG. 26, an embodiment of a base station according to the embodiments of this application includes:
a receiving module 2601 and a sending module 2602.

The receiving module 2601 is configured to obtain a second indication message. The second indication message is used to indicate that a terminal starts to perform a cell change or that the terminal starts to perform a cell reselection. The source base station is a base station corresponding to a source serving cell in which the terminal is located before the terminal completes the cell reselection or completes the cell change.

The sending module 2602 is configured to send downlink data to a target base station, so that the target base station sends the downlink data to the terminal. The target base station is a base station corresponding to the target serving cell after the terminal completes the cell reselection or the cell change.

With reference to the foregoing embodiment, the second indication message indicates that the terminal completes the cell reselection.

The receiving module 2601 is further configured to receive a data transmission indication message or a radio link failure indication message sent by the target base station.

The sending module 2602 is further configured to send a first request message to the target base station.

The receiving module 2601 is further configured to receive a first response message fed back by the target base station as the second indication message.

With reference to the foregoing embodiment, the second indication message indicates that the terminal starts to perform the cell change.

The sending module 2602 is further configured to send a second request message to the target base station.

The receiving module 2601 is further configured to receive a second response message fed back by the target base station as the second indication message.

With reference to the foregoing embodiment, the sending module 2602 is further configured to send the downlink data to the target base station by using an interconnect interface X2 between base stations.

Further, the base station in FIG. 26 may be further configured to perform any step performed by the base station in any one of FIG. 1 to FIG. 22, and implement any function that can be implemented by the base station in any one of FIG. 1 to FIG. 22.

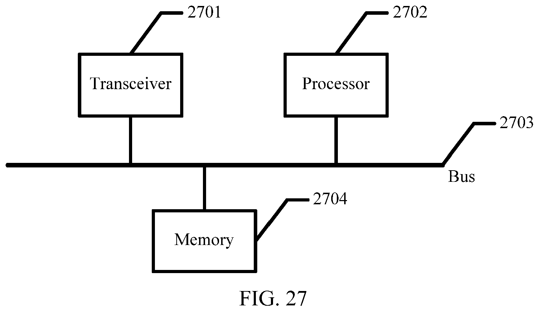

In this embodiment, after the receiving module 2601 receives the message indicating that the terminal completes the cell reselection or the cell change, the sending module 2602 sends the downlink data to the target base station. This can effectively ensure that the terminal can completely receive, after accessing the target base station, the downlink data that is not completely received before the handover or the reselection, in other words, effectively ensure that the downlink data of the terminal is not lost, thereby ensuring mobility of the terminal in connected mode. Specifically, referring to FIG. 27, another embodiment of a base station according to the embodiments of this application includes:
a transceiver 2701 and a processor 2702, where the transceiver 2701 and the processor 2702 are connected to each other by using a bus 2703.

The bus 2703 may be a PCI bus, an EISA bus, or the like. The bus may include an address bus, a data bus, a control bus, and the like. For ease of representation, the bus in FIG. 27 is represented by using only one bold line, but it does not indicate that there is only one bus or only one type of bus.

The processor 2702 may be a CPU, an NP, or a combination of a CPU and an NP.

The processor 2702 may further include a hardware chip. The hardware chip may be an ASIC, a PLD, or a combination thereof. The foregoing PLD may be a CPLD, an FPGA, a GAL, or any combination thereof.

As shown in FIG. 27, the base station may further include a memory 2704. The memory 2704 may include a volatile memory (volatile memory), such as a RAM. The memory may further include a non-volatile memory (non-volatile memory), such as a flash memory (flash memory), an HDD, or an SSD. The memory 2704 may further include a combination of the foregoing types of memories.

Optionally, the memory 2704 may be further configured to store a program instruction. The processor 2702 may invoke the program instruction stored in the memory 2704, to perform one or more steps in the embodiment shown in any one of FIG. 1 to FIG. 22, or an optional implementation thereof, to implement the function of behavior of the base station in the foregoing method.

With reference to the foregoing embodiment, the transceiver 2701 performs the steps of receiving and sending data by the base station in the steps in the foregoing embodiment.

With reference to the foregoing embodiment, the processor 2702 performs the steps of processing data by the base station in the steps in the foregoing embodiment.

In this embodiment, after the transceiver 2701 receives the message indicating that the terminal completes the cell reselection or the cell change, the transceiver 2701 sends the downlink data to the target base station. This can effectively ensure that the terminal can completely receive, after accessing the target base station, the downlink data that is not completely received before the handover or the reselection, in other words, effectively ensure that the downlink data of the terminal is not lost, thereby ensuring mobility of the terminal in connected mode.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A data processing method, wherein the method is applicable to the Narrowband Internet of Things, and comprises:
obtaining, by a core network device, a first indication message, wherein the first indication message is used to indicate that a terminal completes a cell change or a cell reselection; and
sending, by the core network device, downlink data to a target base station, wherein the target base station is a base station to which the terminal is connected after completing the cell change or the cell reselection.

2. The method according to claim 1, wherein before the obtaining, by a core network device, a first indication message, the method further comprises:
saving, by the core network device, the downlink data, and starting a first timer, wherein the downlink data is downlink data to be sent by the core network device to a source base station, and the source base station is a base station to which the terminal is connected before completing cell handover or the cell reselection; and
the obtaining, by a core network device, a first indication message comprises:
obtaining, by the core network device, the first indication message during operation of the first timer.

3. The method according to claim 2, wherein after the saving, by the core network device, the downlink data, and starting a first timer, the method further comprises:
if the first timer times out and the core network device does not obtain the first indication message, deleting, by the core network device, the saved downlink data.

4. The method according to claim 2, wherein before the sending, by the core network device, downlink data to a target base station, the method further comprises:
receiving, by the core network device, feedback information of the terminal; and
if the feedback information indicates that the terminal does not completely receive the downlink data, triggering the core network device to send the downlink data to the target base station.

5. The method according to any one of claims 1 to 4, the first indication message may be an initial terminal context message initial UE message, a path switch information path switch message, or another message.

6. The method according to claim 1, wherein before the obtaining, by a core network device, a first indication message, the method further comprises:
receiving, by the core network device, indication signaling, wherein the indication signaling is used to indicate that the terminal is to perform the cell reselection or that the terminal is to perform the cell change; and
stopping, by the core network device, sending the downlink data to the source base station, and starting a second timer, wherein the downlink data is downlink data to be sent by the core network device to the source base station; and
the obtaining, by a core network device, a first indication message comprises:
obtaining, by the core network device, the first indication message during operation of the second timer.

7. The method according to claim 6, wherein after the stopping, by the core network device, sending the downlink data to the source base station, and starting a second timer, the method further comprises:
if the second timer times out and the core network device does not obtain the first indication message, resuming, by the core network device, sending of the downlink data to the source base station.

8. The method according to claim 1, wherein before the obtaining, by a core network device, a first indication message, the method further comprises:
receiving, by the core network device, the indication signaling; and
starting, by the core network device, to send the downlink data to the target base station, keeping sending the downlink data to the source base station, and starting a third timer, wherein the downlink data is downlink data to be sent by the core network device to the source base station;
the obtaining, by a core network device, a first indication message comprises:
obtaining, by the core network device, the first indication message during operation of the third timer; and
the sending, by the core network device, downlink data to a target base station comprises:
sending, by the core network device, the downlink data to the target base station, and stopping sending the downlink data to the source base station.

9. The method according to claim 8, wherein after the starting, by the core network device, to send the downlink data to the target base station, keeping sending the downlink data to the source base station, and starting a third timer, the method further comprises:
if the core network device does not obtain the first indication message after the third timer times out, stopping, by the core network device, sending the downlink data to the target base station.

10. The method according to claim 1, wherein the core network device is a mobility management entity MME.

11. The method according to any one of claims 6 to 8, wherein the first indication message is an uplink non-access stratum message transport UL NAS transport message or another S1-AP message.

12. A data processing method, wherein the method is applicable to the Narrowband Internet of Things, and comprises:
obtaining, by a source base station, a second indication message, wherein the second indication message is used to indicate that a terminal starts to perform cell handover or that the terminal starts to perform a cell reselection, and the source base station is a base station corresponding to a source serving cell in which the terminal is located before the terminal completes the cell reselection or completes the cell handover; and
sending, by the source base station, downlink data to a target base station, so that the target base station sends the downlink data to the terminal, wherein the target base station is a base station corresponding to the target serving cell after the terminal completes the cell reselection or the cell handover.

13. The method according to claim 12, wherein the second indication message indicates that the terminal completes the cell reselection; and
the obtaining, by a source base station, a second indication message comprises:
receiving, by the source base station, a cell reselection or cell change indication message or a radio link failure indication message sent by the target base station;
sending, by the source base station, a first request message to the target base station; and
receiving, by the source base station, a first response message fed back by the target base station as the second indication message.

14. The method according to claim 13, wherein the first request message is a handover request message, and the first response message is a handover acknowledgment message.

15. The method according to claim 13, wherein the first request message is an interconnect interface application protocol X2-AP message, and the first response message is an X2-AP message.

16. The method according to claim 12, wherein the second indication message indicates that the terminal starts to perform a cell change; and
the obtaining, by a source base station, a second indication message comprises:
sending, by the source base station, a second request message to the target base station; and
receiving, by the source base station, a second response message fed back by the target base station as the second indication message.

17. The method according to claim 16, wherein the second request message is a handover request message, and the second response message is a handover acknowledgment message.

18. The method according to claim 16, wherein the second request message is an X2-AP message, and the second response message is an X2-AP message.

19. The method according to any one of claims 12 to 18, wherein the sending, by the source base station, downlink data to a target base station comprises:
sending, by the source base station, the downlink data to the target base station by using an interconnect interface X2 between base stations.

20. The method according to any one of claims 12 to 18, wherein the downlink data is downlink non-access stratum data NAS PDU of a receiving acknowledgment message that is not fed back by the terminal or downlink NAS PDU of the terminal that is not sent by the source base station, and the downlink data is sent by the core network device to the source base station.

21. The method according to any one of claims 12 to 18, wherein the second indication message is an uplink direct transfer message UL information transfer or another Radio Resource Control RRC message.

22. A core network device, wherein the core network device is applicable to the Narrowband Internet of Things, and comprises:
a receiving module, configured to obtain a first indication message, wherein the first indication message is used to indicate that a terminal completes a cell change or a cell reselection; and
a sending module, configured to send downlink data to a target base station, wherein the target base station is a base station to which the terminal is connected after completing the cell change or the cell reselection.

23. The core network device according to claim 22, wherein the core network device further comprises a processing module, configured to: save the downlink data, and start a first timer, wherein the downlink data is downlink data to be sent by the core network device to a source base station, and the source base station is a base station to which the terminal is connected before completing cell handover or completing the cell reselection; and
the receiving module is further configured to obtain the first indication message during operation of the first timer.

24. The core network device according to claim 23, wherein the processing module is further configured to delete the saved downlink data if the first timer times out and the receiving module does not obtain the first indication message.

25. The core network device according to claim 23, wherein the receiving module is further configured to receive feedback information of the terminal; and
the processing module is further configured to: if the feedback information indicates that the terminal does not completely receive the downlink data, trigger sending of the downlink data to the target base station.

26. The core network device according to any one of claims 22 to 25, the first indication message may be an initial terminal context message initial UE message, a path switch information path switch message, or another message.

27. The core network device according to claim 22, wherein the receiving module is further configured to receive indication signaling, wherein the indication signaling is used to indicate that the terminal is to perform the cell reselection or that the terminal is to perform the cell change;
the processing module is further configured to: stop sending the downlink data to the source base station, and start a second timer, wherein the downlink data is downlink data to be sent by the core network device to the source base station; and
the receiving module is further configured to obtain the first indication message during operation of the second timer.

28. The core network device according to claim 27, wherein the processing module is further configured to: if the second timer times out and the receiving module does not obtain the first indication message, resume sending of the downlink data to the source base station.

29. The core network device according to claim 22, wherein the receiving module is further configured to receive the indication signaling;
the sending module is further configured to: start to send the downlink data to the target base station, and keep sending the downlink data to the source base station, wherein the downlink data is downlink data to be sent by the core network device to the source base station;
the processing module is further configured to start a third timer;
the receiving module is further configured to obtain the first indication message during operation of the third timer; and
the sending module is further configured to: send the downlink data to the target base station, and stop sending the downlink data to the source base station.

30. The core network device according to claim 29, wherein the processing module is further configured to: if the first indication message is not obtained after the third timer times out, stop sending the downlink data to the target base station.

31. The core network device according to claim 22, wherein the core network device is an MME.

32. The core network device according to any one of claims 27 to 29, wherein the first indication message is a UL NAS transport message or another S1-AP message.

33. A base station, wherein the base station is applicable to the Narrowband Internet of Things, and comprises:
a receiving module, configured to obtain a second indication message, wherein the second indication message is used to indicate that a terminal starts to perform cell handover or that the terminal starts to perform a cell reselection, and the source base station is a base station corresponding to a source serving cell in which the terminal is located before the terminal completes the cell reselection or completes the cell handover; and
a sending module, configured to send downlink data to a target base station, so that the target base station sends the downlink data to the terminal, wherein the target base station is a base station corresponding to the target serving cell after the terminal completes the cell reselection or the cell handover.

34. The base station according to claim 33, wherein the second indication message indicates that the terminal completes the cell reselection;
the receiving module is further configured to receive a data transmission indication message or a radio link failure indication message sent by the target base station;
the sending module is further configured to send a first request message to the target base station; and
the receiving module is further configured to receive a first response message fed back by the target base station as the second indication message.

35. The base station according to claim 34, wherein the first request message is a handover request message, and the first response message is a handover acknowledgment message.

36. The base station according to claim 34, wherein the first request message is an interconnect interface application protocol X2-AP message, and the first response message is an X2-AP message.

37. The base station according to claim 33, wherein the second indication message indicates that the terminal starts to perform a cell change;
the sending module is further configured to send a second request message to the target base station; and
the receiving module is further configured to receive a second response message fed back by the target base station as the second indication message.

38. The base station according to claim 37, wherein the second request message is a handover request message, and the second response message is a handover acknowledgment message.

39. The base station according to claim 37, wherein the second request message is an X2-AP message, and the second response message is an X2-AP message.

40. The base station according to any one of claims 33 to 39, wherein the sending module is further configured to send the downlink data to the target base station by using an interconnect interface X2 between base stations.

41. The base station according to any one of claims 33 to 39, wherein the downlink data is downlink NAS PDU of a receiving acknowledgment message that is not fed back by the terminal or downlink NAS PDU of the terminal that is not sent by the source base station.

42. The base station according to any one of claims 33 to 39, wherein the second indication message is a UL information transfer message or another RRC message.

43. A core network device, comprising:
a transceiver, a processor, and a bus, wherein
the transceiver and the processor are connected to each other by using the bus; and
the transceiver performs the following steps: obtaining a first indication message, wherein the first indication message is used to indicate that a terminal completes a cell change or a cell reselection; and sending downlink data to a target base station, wherein the target base station is a base station to which the terminal is connected after completing the cell change or the cell reselection.

44. Abase station, comprising:
a transceiver, a processor, and a bus, wherein
the transceiver and the processor are connected to each other by using the bus; and
the transceiver performs the following steps: obtaining a second indication message, wherein the second indication message is used to indicate that a terminal starts to perform cell handover or that the terminal starts to perform a cell reselection, and the source base station is a base station corresponding to a source serving cell in which the terminal is located before the terminal completes the cell reselection or completes the cell handover; and sending downlink data to a target base station, so that the target base station sends the downlink data to the terminal, wherein the target base station is a base station corresponding to the target serving cell after the terminal completes the cell reselection or the cell handover.
